# EUROPEAN PATENT APPLICATION

(11) **EP 4 322 670 A1**
(43) Date of publication of application: **14.02.2024**
(21) Application number: 22806428.3
(22) Date of filing: 18.04.2022
(51) Int. Cl.: H04W 72/08

(54) **RESOURCE MANAGEMENT METHOD AND DEVICE**

(30) Priority: 14.05.2021 CN 202110529036
(71) Applicant: Huawei Technologies Co., Ltd., Longgang Shenzhen, Guangdong 518129 (CN)
(72) Inventor: XIA, Jikang, Shenzhen, Guangdong 518129 (CN); WANG, Shipeng, Shenzhen, Guangdong 518129 (CN); MENG, Meng, Shenzhen, Guangdong 518129 (CN); YANG, Jianhua, Shenzhen, Guangdong 518129 (CN)
(74) Representative: MERH-IP Matias Erny Reichl Hoffmann Patentanwälte PartG mbB
(86) International application number: PCT/CN2022/087394
(87) International publication number: WO 2022/237458

(57) **Abstract**

This application discloses a resource management method and a device. The method is applied to a domain including a primary device and a plurality of secondary devices, and a plurality of interconnected devices in the domain form a team. The method includes: The primary device receives channel score information from each secondary device, generates first RRM information based on the received channel score information and channel score information of the primary device, and sends the first RRM information to each secondary device. The first RRM information indicates a priority ranking of channels, and a higher priority of a channel indicates a lower degree of interference to the channel. The primary device may perform priority ranking on information based on channel interference information reported by each channel, and preferentially allocate, to each device, a channel with less interference based on the priority ranking of the channels. Therefore, collaborative scheduling and anti-interference across an entire network can be implemented, and an overall throughput of the network can be improved.

## Description

### CROSS-REFERENCE TO RELATED APPLICATIONS

This application claims priority to Chinese Patent Application No. 202110529036.9, filed with the China National Intellectual Property Administration on May 14, 2021 and entitled "RESOURCE MANAGEMENT METHOD AND DEVICE", which is incorporated herein by reference in its entirety.

### TECHNICAL FIELD

This application relates to field of communication technologies, and in particular, to a resource management method and a device.

### BACKGROUND

A plurality of devices are usually interconnected based on wireless fidelity (wireless fidelity, Wi-Fi). Wi-Fi works on an unlicensed frequency band. In other words, any device that conforms to radio specifications may send or receive data on this frequency band. To reduce a collision between devices in a network, it is stipulated that all the devices in the network may perform communication by using a carrier sense multiple access with collision avoidance (carrier sense multiple access with collision avoidance, CSMA/CA) mechanism. That is, before sending data, all the devices in the network may actively initiate a channel access procedure, and then may sense a state of a channel by using the CSMA/CA mechanism, that is, determine whether the channel is idle. The channel is used to send data only when the channel is in an idle state.

However, Wi-Fi uses unlicensed frequency band networking and a CSMA channel contention mechanism, causing severe channel interference in the network. Especially in service-intensive scenarios such as offices, flagship stores, and exhibitions, channel interference is severe, causing frame freezing of a service and the like to a device. In a network topology with a plurality of devices interconnected, there are many links between devices. When services on a plurality of links are performed at the same time, a probability of channel interference between the plurality of links is higher, and an overall throughput of the network is limited. There is no corresponding anti-interference solution.

### SUMMARY

This application provides a resource management method and a device, to manage all air interface resources in a system, and reduce mutual interference between links in the system.

According to a first aspect, a resource management method for a distributed system is provided. The method may be used in a domain including a primary device and a plurality of secondary devices, and a plurality of interconnected devices in the domain form a team. The method is applicable to any device in the domain. The following uses an example in which the method is performed by the primary device. The method includes:

The primary device receives channel score information from each secondary device, generates first radio resource management (radio resource management, RRM) information based on the received channel score information and channel score information of the primary device, and sends the first RRM information to each secondary device. Each piece of channel score information indicates a degree of interference to each channel measured by a corresponding device. The first RRM information indicates a priority ranking of the channels, and a higher priority of a channel indicates a lower degree of interference to the channel.

In this embodiment of this application, a channel interference score and a service type of each device in the system are obtained, and an allocated channel is scheduled based on a channel capacity and a channel interference status. In this way, more device links can work on a channel with less interference, to reduce mutual interference between a plurality of links.

It should be understood that before the primary device generates the first RRM information based on the received channel score information and the channel score information of the primary device, the primary device measures each channel, to obtain the channel score information of the primary device.

In a possible implementation, that the primary device generates first RRM information based on the received channel score information and channel score information of the primary device includes:

The primary device combines channel interference information from the plurality of secondary devices, to obtain target channel interference information, and generates the first RRM information based on the target interference information. The target interference information includes a channel interference score and/or an interference duty cycle of each channel. In this solution, the primary device may initially rank priorities of the channels based on the channel interference scores and/or the interference duty cycles of each device.

In a possible implementation, the primary device updates the first RRM information based on one or more of the following factors: the channel interference score of each channel, the interference duty cycle of each channel, a service priority of a team corresponding to each channel, a remaining rate capacity of each channel, a total rate capacity of each channel, and a quantity of devices included in each team.

It should be understood that channel scheduling is also affected if actual service requirements of devices in each team are different; or a quantity of devices in each team also affects channel scheduling; or channel scheduling is also affected if remaining rate capacities of channels in each team are different. Therefore, in this solution, in addition to the channel interference scores, priority ranking may be further performed on the channels by comprehensively considering the service priority of the team corresponding to each channel, the remaining rate capacity of each channel, the total rate capacity of each channel, the quantity of devices included in each team, and the like. In this way, a more accurate priority ranking can be obtained, to ensure that a degree of interference to a channel allocated to each team is as low as possible, and ensure that a service of each team is not affected.

In a possible implementation, the method further includes:

The primary device determines, based on a service priority of a first team, that a remaining rate capacity of a first channel to be allocated to the first team does not meet a service requirement of the first team, lowers a priority of the first channel by one level, and updates the first RRM information to second RRM information. In this solution, when a channel is to be allocated to the first team, a remaining rate capacity of the to-be-allocated channel may be comprehensively considered. When the remaining rate capacity of the to-be-allocated channel is insufficient to meet a current service requirement, a channel with more interference may be allocated, to reduce impact on a service of the first team. That is, a priority of the to-be-allocated channel is lowered by one level, and the RRM information is updated. In this way, the RRM information is dynamically adjusted based on the remaining rate capacity of each channel and an actual service requirement of each team, to allocate a channel to each team more properly.

In a possible implementation, the method further includes: If the primary device determines that the primary device meets a channel switching condition, the primary device sends a first notification frame to another device in a team in which the primary device is located. The first notification frame indicates the another device to switch to an alternative channel. The channel switching condition includes one or more of the following: frame freezing of a service occurs, a service delay exceeds a second preset threshold, and a second channel on which the primary device currently works is busy. In this solution, any device in the system detects that channel interference affects a service of the device, and may request another device in the system to switch to an alternative channel, to maximize anti-interference performance and a system capacity.

In a possible implementation, the method further includes: If the primary device determines that a second secondary device and a third secondary device included in a second team work on a plurality of channels, the primary device sends the first notification frame to the third secondary device. The first notification frame indicates the third secondary device to switch to a channel on which the second secondary device works. In this solution, the primary device finds, by using connection information of the devices in the system, that different devices in a team work on a plurality of channels, and the primary device may send, to one or more devices in the team, a notification frame used for channel switching, to ensure that the devices in the team work on a same channel. This can avoid a case that some secondary devices may switch to a channel of another team because the secondary devices do not obtain the second RRM information.

In a possible implementation, the method further includes: If the primary device determines that a third team and a fourth team work on a third channel, the primary device sends a second notification frame to the fourth team. The second notification frame indicates the fourth team to switch from the third channel to a fourth channel. In this solution, the primary device determines that a plurality of teams switch to a same channel or a channel with less interference, and the primary device forces each secondary device to switch from a current channel.

According to a second aspect, a resource management method for a distributed system is provided. The method may be used in a domain including a primary device and a plurality of secondary devices, and a plurality of interconnected devices in the domain form a team. The method is applicable to any device in the domain. The following uses an example in which the method is performed by a first secondary device. The method includes:

The first secondary device sends channel score information to the primary device, receives first RRM information from the primary device, and when determining that a degree of interference to a first channel on which the first secondary device currently works is greater than a first preset threshold, switches from the first channel to a second channel based on the first RRM information. The channel score information indicates a degree of interference to each channel measured by the first secondary device. A higher priority of a channel indicates a lower degree of interference to the channel. The degree of interference to the first channel is greater than a degree of interference to the second channel.

In a possible implementation, that the first secondary device sends channel score information to the primary device includes:

The first secondary device sends the channel score information to the primary device when a first duration of an interference reporting timer expires. The interference reporting timer includes a plurality of durations, and each duration is used by a part of the secondary devices to report respective channel interference information. In this solution, the interference reporting timer includes a plurality of durations, and each duration is used by a part of the secondary devices to report respective channel interference information. In this way, the information interference information reported by the secondary devices can be staggered as much as possible, to ensure transmission quality.

In a possible implementation, a difference between the degree of interference to the first channel and the degree of interference to the second channel is greater than or equal to a second preset threshold. In this solution, the secondary device switches to a to-be-allocated channel only when determining that a degree of interference between the current working channel and the to-be-allocated channel is large, to avoid an unnecessary switching process.

In a possible implementation, the method further includes:

The first secondary device determines that the first secondary device meets a channel switching condition, and sends a first notification frame to another device in a team in which the first secondary device is located. The first notification frame indicates the another device to switch to an alternative channel. The channel switching condition includes one or more of the following: frame freezing of a service occurs, a service delay exceeds the second preset threshold, and the second channel is busy.

In a possible implementation, the method further includes:

The first secondary device receives a second notification frame from the primary device. The second notification frame indicates the first secondary device to switch to a channel on which a second secondary device works. The first secondary device and the second secondary device belong to a same team, and the first secondary device and the second secondary device work on different channels.

In a possible implementation, the method further includes:

The first secondary device receives a third notification frame from the primary device. The third notification frame indicates the first secondary device to switch from a fourth channel to a fifth channel. The fourth channel is a channel on which a plurality of teams work, and the first secondary device belongs to one of the plurality of teams.

For beneficial effects of the second aspect or any possible implementation of the second aspect, refer to the beneficial effects of the first aspect and the possible implementations of the first aspect. Details are not described herein again.

According to a third aspect, an electronic device is provided. The electronic device includes a display, one or more processors, a memory, a transceiver, and one or more programs. The one or more programs are stored in the memory, the one or more programs include instructions, and when the instructions are executed by the electronic device, the electronic device is enabled to perform the method performed by the primary device provided in any one of the first aspect or the possible implementations, or the electronic device is enabled to perform the method performed by the first secondary device provided in any one of the second aspect or the possible implementations.

For example, the transceiver may be configured to receive channel score information from each secondary device, where each piece of channel score information indicates a degree of interference to each channel measured by a corresponding device. The processor may be configured to generate first RRM information based on the received channel score information and channel score information of the primary device, where the first RRM information indicates a priority ranking of the channels, and a higher priority of a channel indicates a lower degree of interference to the channel. The transceiver is further configured to send the first RRM information to each secondary device.

In an optional implementation, the processor is specifically configured to:
combine channel interference information from the plurality of secondary devices, to obtain target channel interference information, where the target interference information includes a channel interference score and/or an interference duty cycle of each channel; and
perform priority ranking on the channels based on the target channel interference information and one or more of the following factors, and generate the first RRM information based on the ranked channels: the channel interference score of each channel, the interference duty cycle of each channel, a service priority of a team corresponding to each channel, a remaining rate capacity of each channel, a total rate capacity of each channel, and a quantity of devices included in each team.

In an optional implementation, the processor is further configured to: determine, based on a service priority of a first team, that a remaining rate capacity of a first channel to be allocated to the first team does not meet a service requirement of the first team, lower a priority of the first channel by one level, and update the first RRM information to second RRM information.

In an optional implementation, the processor is further configured to determine that the primary device meets a channel switching condition. The transceiver is further configured to send a first notification frame to another device in a team in which the primary device is located. The first notification frame indicates the another device to switch to an alternative channel. The channel switching condition includes one or more of the following: frame freezing of a service occurs, a service delay exceeds a second preset threshold, and a second channel on which the primary device currently works is busy.

In an optional implementation, the processor is further configured to determine that a second secondary device and a third secondary device included in a second team work on a plurality of channels. The transceiver is further configured to send the first notification frame to the third secondary device. The first notification frame indicates the third secondary device to switch to a channel on which the second secondary device works.

In an optional implementation, the processor is further configured to determine that a third team and a fourth team work on a third channel. The transceiver is further configured to send a second notification frame to the fourth team. The second notification frame indicates the fourth team to switch from the third channel to a fourth channel.

For another example, the transceiver is configured to send channel score information to the primary device, and receive first RRM information from the primary device. The processor is configured to: when determining that a degree of interference to a first channel on which the first secondary device currently works is greater than a first preset threshold, switch from the first channel to a second channel based on the first RRM information. The channel score information indicates a degree of interference to each channel measured by the first secondary device. A higher priority of a channel indicates a lower degree of interference to the channel. The degree of interference to the first channel is greater than a degree of interference to the second channel.

In an optional implementation, the transceiver is specifically configured to:
send the channel score information to the primary device when a first duration of an interference reporting timer expires. The interference reporting timer includes a plurality of durations, and each duration is used by a part of the secondary devices to report respective channel interference information.

In an optional implementation, a difference between the degree of interference to the first channel and the degree of interference to the second channel is greater than or equal to a second preset threshold.

In an optional implementation, the processor is further configured to determine that the first secondary device meets a channel switching condition. The transceiver is further configured to send a first notification frame to another device in a team in which the first secondary device is located. The first notification frame indicates the another device to switch to an alternative channel. The channel switching condition includes one or more of the following: frame freezing of a service occurs, a service delay exceeds the second preset threshold, and the second channel is busy.

In an optional implementation, the transceiver is further configured to:
receive a second notification frame from the primary device. The second notification frame indicates the first secondary device to switch to a channel on which a second secondary device works. The first secondary device and the second secondary device belong to a same team, and the first secondary device and the second secondary device work on different channels.

In an optional implementation, the transceiver is further configured to:
receive a third notification frame from the primary device. The third notification frame indicates the first secondary device to switch from a fourth channel to a fifth channel. The fourth channel is a channel on which a plurality of teams work, and the first secondary device belongs to one of the plurality of teams.

According to a fourth aspect, an electronic device is provided. The electronic device includes a module/unit configured to perform the method performed by the primary device provided in any one of the first aspect or the possible implementations; or the electronic device includes a module/unit configured to perform the method performed by the first secondary device provided in any one of the second aspect or the possible implementations.

According to a fifth aspect, a system is provided. The system includes a first device, a second device, and a third device. Optionally, the system may further include another device, and the devices included in the system can implement a distributed service, for example, multi-screen collaboration. Each device may be implemented by using the electronic device in the third aspect or the electronic device in the fourth aspect.

According to a sixth aspect, a chip is provided. The chip includes a processor and an interface. The interface is configured to communicate with the processor and receive information from another device. The processor is configured to perform the method according to any one of the first aspect or the possible implementations of the first aspect, or the processor is configured to perform the method according to any one of the second aspect or the possible implementations of the second aspect.

According to a seventh aspect, a computer-readable storage medium is provided. The computer-readable storage medium is configured to store a computer program, and when the computer program runs on a computer, the computer is enabled to perform one or more of the following methods: the method performed by the primary device in any one of the first aspect or the possible implementations, and the method performed by the first secondary device in any one of the second aspect or the possible implementations.

According to an eighth aspect, a computer program product including instructions is provided. The computer program product is configured to store a computer program, and when the computer program runs on a computer, the computer is enabled to perform one or more of the following methods: the method performed by the primary device in any one of the first aspect or the possible implementations, and the method performed by the first secondary device in any one of the second aspect or the possible implementations.

### BRIEF DESCRIPTION OF DRAWINGS

FIG. 1 is a schematic diagram of a network architecture of a distributed system;
FIG. 2 is a schematic diagram of a network architecture of another distributed system;
FIG. 3 is a schematic diagram of a structure of an electronic device;
FIG. 4 is a schematic diagram of a network architecture of a distributed system according to an embodiment of this application;
FIG. 5A to FIG. 5C are a schematic flowchart of a resource management method according to an embodiment of this application;
FIG. 6 is a schematic diagram of a network architecture of an example distributed system according to an embodiment of this application;
FIG. 7 is a schematic flowchart of generating RRM information by a primary device based on channel interference information of each secondary device according to an embodiment of this application;
FIG. 8 is a schematic diagram of combining channel interference information of secondary devices by a primary device according to an embodiment of this application;
FIG. 9 is a schematic diagram of a network architecture of a distributed system according to an embodiment of this application;
FIG. 10 is a schematic diagram of a service type of each team and a rate requirement of a service of each team in FIG. 9;
FIG. 11 is a schematic diagram of a channel switching sequence of devices according to an embodiment of this application;
FIG. 12 is a schematic diagram of a structure of an action frame used for reporting channel interference information by a secondary device according to an embodiment of this application;
FIG. 13 is a schematic diagram of a structure of an action frame used for channel switching according to an embodiment of this application;
FIG. 14 is a schematic diagram of a structure of a beacon frame according to an embodiment of this application; and
FIG. 15 is a schematic diagram of a structure of an electronic device according to an embodiment of this application.

### DESCRIPTION OF EMBODIMENTS

To make objectives, technical solutions, and advantages of this application clearer, the following further describes this application in detail with reference to the accompanying drawings.

With development of internet of things technologies, more services or applications are expected to be implemented through multi-device collaboration. For example, to improve user experience, a multi-screen collaboration function (or referred to as a multi-device collaboration function) is provided, so as to support an application and a service of multi-device collaboration, for example, multi-screen collaboration and information sharing. For example, in the multi-screen collaboration function, a device 1 may perform projection onto a device 2, so that a file on the device 1 can be opened on the device 2. For example, if a mobile phone and a personal computer (personal computer, PC) perform multi-screen collaboration, a mirror of the mobile phone is displayed on a display of the PC, and the mirror of the mobile phone displayed on the PC may also be understood as a projection screen. A user performs an operation on the projection screen of the PC. For example, if the user chooses to open a file A, the PC can open the file A, but the file A is actually a file on the mobile phone. Compared with the mobile phone, the PC has a larger display area. The user can view the file on the PC, and this can improve user's view effect.

For ease of description, in embodiments of this application, an application or a service that depends on multi-device collaboration is collectively referred to as a distributed service. It should be understood that, to support the distributed service, a plurality of terminal devices such as a mobile phone, a tablet computer, a PC, and a display need to be connected together, so as to implement a system of a one-to-one connection, a one-to-many connection, or even a many-to-many connection between the plurality of devices, namely, multi-device interconnection, so that the distributed service runs cooperatively in the plurality of terminal devices.

In an example, the plurality of devices may form a one-to-one connection system or a one-to-many connection system. For example, a distributed system established based on a wireless fidelity point-to-point (wireless fidelity Peer-to-Peer, Wi-Fi P2P) protocol is defined and developed based on the wireless fidelity (wireless fidelity, Wi-Fi) alliance (Wi-Fi alliance, WFA). The Wi-Fi P2P protocol is a point-to-point connection technology, which enables a plurality of Wi-Fi devices to form a network (Network) without access points (or referred to as access nodes) (access point, AP). The network may also be referred to as a P2P network or a P2P group (Group), and the plurality of Wi-Fi devices in the network can communicate with each other. A general principle of the Wi-Fi P2P protocol is that a transmission control protocol (transmission control protocol, TCP)/internet protocol (internet protocol, IP) link may be directly established between two stations (or referred to as stations) (Station, STA). One STA of the two STAs may be considered as a conventional AP, and is referred to as a group owner (group owner, GO). Relatively, the other STA of the two STAs may be referred to as a group client (group client, GC). That is, the GC is similar to a STA, and the GO is similar to an AP. In this case, the GC may also be connected to the GO, which is similar to a case in which the STA is connected to the AP. It should be understood that one GO in the P2P network or P2P group may correspond to one GC, or may correspond to a plurality of GCs. That is, the GO and the GC may be in a one-to-one relationship, or may be in a one-to-many relationship.

It should be understood that the Wi-Fi P2P protocol is developed based on an 802.11 protocol framework, and belongs to a centralized network communication structure. In other words, Wi-Fi P2P requires that each terminal device needs to be configured with a role, for example, may be a GO or a GC. As a central node, the GO can communicate with any GC node connected to the GO. However, GOs cannot communicate with each other and GCs cannot communicate with each other.

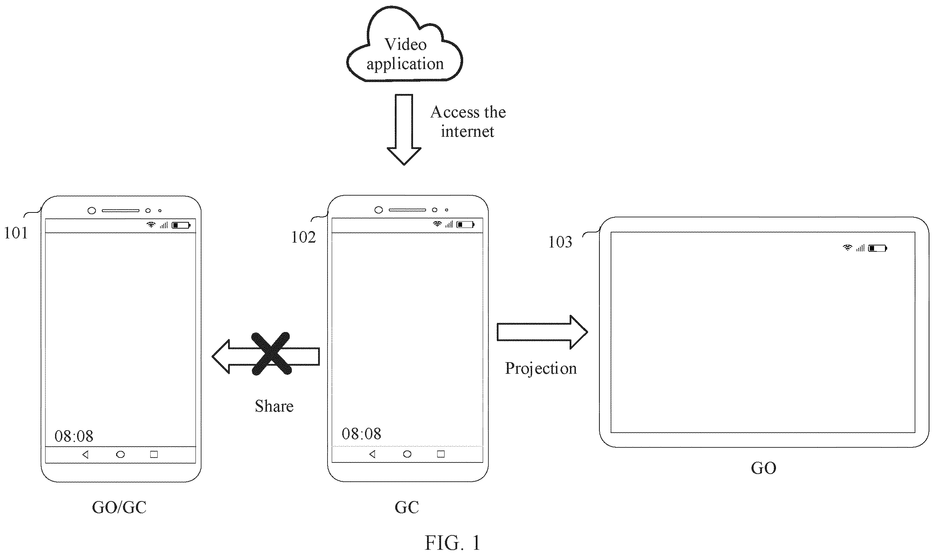

For ease of understanding, FIG. 1 is a schematic diagram of a network architecture of a distributed system. Three terminal devices are included in FIG. 1, and the three terminal devices are a terminal device 101, a terminal device 102, and a terminal device 103 that are located in one network. In FIG. 1, an example in which the terminal device 101 and the terminal device 102 are mobile phones, and the terminal device 103 is a PAD is used. In FIG. 1, after the terminal device 101, the terminal device 102, and the terminal device 103 initially establish links, the terminal device 103 is a GO, and the terminal device 101 and the terminal device 102 each are a GC. The terminal device 103 may perform a cooperative service with the terminal device 101, or may perform a cooperative service with the terminal device 102. For example, as shown in FIG. 1, the terminal device 103 and the terminal device 102 may perform a projection service. If a cooperative service exists in any two GCs in a plurality of interconnected devices, because the GCs cannot communicate with each other, it is apparent that the cooperative service cannot be performed. For example, as shown in FIG. 1, information needs to be shared between the terminal device 101 and the terminal device 102. However, because the terminal device 101 and the terminal device 102 each are a GC, a link between the terminal device 102 and the terminal device 103 need to be disconnected due to role limitation of the terminal device 102 and the terminal device 101. A link between the terminal device 101 and the terminal device 102 is re-established, so that the terminal device 101 is GO, and shares the information with the terminal device 102. Otherwise, the information cannot be shared between the terminal device 102 and the terminal device 101. After the link between the terminal device 101 and the terminal device 102 is re-established, one of the terminal device 101 and the terminal device 102 serves as a GO, the other terminal device serves as a GC, and a link between the terminal device 102 and the terminal device 103 is disconnected. For example, in FIG. 1, the terminal device 101 serves as the GO, and the terminal device 102 serves as a GC. In other words, a role of a device may change with an established link. For example, the role of the terminal device 101 is a GC after the terminal device 101 initially establishes a link, and the role of the terminal device 101 is a GO after the link is re-established.

In another example, the plurality of devices may form a many-to-many connection system. For example, in some embodiments, a distributed system is established based on a neighbor awareness networking (neighbor awareness networking, NAN) protocol. That is, a device discovers another device in a same area based on Wi-Fi. One device is selected from all devices in the area as a primary device, and a device other than the primary device is a secondary device. The secondary device may synchronize time with the primary device. For example, the primary device periodically sends a signaling frame that carries time information. Each secondary device receives the signaling frame, and synchronizes time with the primary device based on the time information in the signaling frame. In this way, time of all devices network is synchronized. For example, the primary device may allocate some discovery windows (discovery window, DW), and the primary device and each secondary device may broadcast information of the primary device and each secondary device in the DWs. Certainly, any device may monitor information broadcast by another device in the DW. Any device may discover another device by detecting a synchronization beacon (synchronization beacon) frame sent by another device before a slot of the DW ends. It should be understood that the synchronization beacon frame is sent by a device in an active state. After discovering each other, devices may establish connections to each other.

After a plurality of devices establish connections, each device schedules an air interface resource based on a minimum data transmission unit, namely, an available window (available windows, AW), of air interface resources in time domain (time slice) and frequency domain (channel). That is, each device controls air interface transmission by scheduling AW configurations.

For another example, in some embodiments, devices may alternatively discover each other based on Bluetooth or Wi-Fi, and establish a connection to a discovered device; and then negotiate, through an established communication channel, link information for establishing Wi-Fi direct communication with each other, and implement Wi-Fi direct communication between the devices based on the link information, to form the distributed system. Because the communication connection is established after the devices are discovered, and then the link information for establishing the Wi-Fi direct communication between the devices is negotiated through the communication channel established between the devices, there is no need to allocate a specific role to each device. Regardless of in a distributed system obtained by establishing a connection between devices based on the NAN protocol or a distributed system obtained by discovering devices each other based on Bluetooth or Wi-Fi and establishing a connection to a discovered device, the devices may be in a one-to-one relationship, a one-to-many relationship, or a many-to-many relationship, and roles of the devices are equivalent in the systems. In this way, a distributed service can be coordinated between any devices, and the distributed service is not restricted due to role issues. For example, a first device in a distributed system may perform projection onto a second device, and a file may be shared between the first device and a third device without a role conflict.

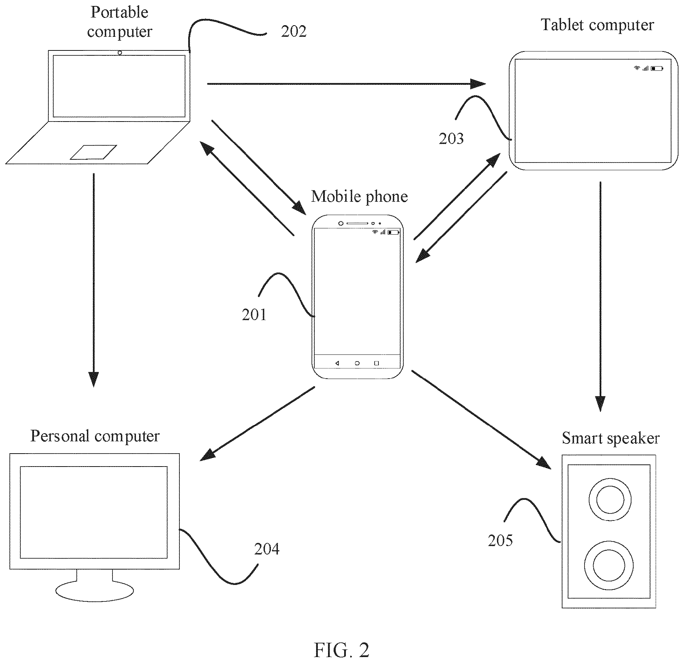

For example, FIG. 2 is a schematic diagram of a distributed system. In FIG. 2, an example in which the distributed system includes five devices is used. It should be understood that the two devices are located in a same network. The five devices are a device 201, a device 202, a device 203, a device 204, and a device 205. The device 201, the device 202, the device 203, the device 204, and the device 205 may perform multi-screen collaboration, information sharing, or the like. For example, the device 201 may perform multi-screen collaboration or information sharing with the device 202 or the device 203, the device 202 and the device 204 may perform multi-screen collaboration, and the device 203 and the device 202 may perform information sharing. In FIG. 2, an example in which the device 201 is a mobile phone, the device 202 is a portable computer, the device 203 is a tablet computer, the device 204 is a personal computer, and the device 205 is a smart speaker is used.

The device 201 is used as an example. The device 201 may broadcast a discovery message through a Bluetooth communication channel. The discovery message is used to discover one or more devices, for example, the device 201 to the device 205. Any device in the device 201 to the device 205, for example, the device 203, receives the discovery message, and may send a response message for the discovery message to the device 201. The device 201 receives the response message, and may establish a Bluetooth connection to the device 203 based on the response message. Likewise, another device may also establish a Bluetooth connection to the device 201. After establishing a Bluetooth connection with each device, the device 201 may negotiate link information for establishing Wi-Fi direct communication, and establish Wi-Fi direct communication with each other based on the link information, to form a distributed system 2. Because the communication connection is established after the devices are discovered, and then the link information for establishing the Wi-Fi direct communication between the devices is negotiated through a communication channel established between the devices, there is no need to allocate a specific role to each device.

A plurality of devices are usually interconnected based on wireless fidelity (wireless fidelity, Wi-Fi). Wi-Fi works on an unlicensed frequency band. In other words, any device that conforms to radio specifications may send or receive data on this frequency band. To reduce a collision between devices in a network, it is stipulated that all the devices in the network may perform communication by using a carrier sense multiple access with collision avoidance (carrier sense multiple access with collision avoidance, CSMA/CA) mechanism. That is, before sending data, all the devices in the network may actively initiate a channel access procedure, and then may sense a state of a channel by using the CSMA/CA mechanism, that is, determine whether the channel is idle. The channel is used to send data only when the channel is in an idle state. However, Wi-Fi uses unlicensed frequency band networking and a CSMA channel contention mechanism, causing severe channel interference in the network. Especially in service-intensive scenarios such as offices, flagship stores, and exhibitions, channel interference is severe, causing frame freezing of a service and the like to a device. In a network topology with a plurality of devices interconnected, there are many links between devices. When services on a plurality of links are performed at the same time, a probability of channel interference between the plurality of links is higher, and an overall throughput of the network is limited.

For example, in the system shown in FIG. 1, when a link is established for a Wi-Fi P2P service, a channel that follows a GO is usually selected, or a channel is randomly selected. In this case, the intra-frequency channel interference may be severe. As a result, a plurality of P2P services interfere with each other, and a P2P service and another service interfere with each other.

For another example, in the system shown in FIG. 2, if connections of a plurality of devices are established based on the NAN protocol, each device controls air interface transmission by scheduling an AW configuration. That is, any device sends related information of the device, for example, time synchronization information, through a social channel (social channel). A social channel may be considered as a frequency domain location for interaction when devices in a near field discover each other, and is used to discover each device in the near field. Any device monitors information from another device on the social channel to discover each other. The social channel may be considered as a negotiated or fixed channel. For example, the social channel is ch6, ch36, ch44, or ch149. It should be understood that 6, 36, 44, and 149 are channel numbers.

The device may construct a synchronization channel sequence around a timing sequence (including a plurality of available windows (AWs) and a plurality of extension windows (extension window, EW) (EWs)). AWs are windows with a fixed length, and enable devices to communicate in short fixed-length slots. EWs can extend a window length, and are flexible. Each device may advertise a window slot that can be used for data communication, and a peer device matches a received window slot with an AW sequence of the peer device. If a common channel exists in specific AWs, communication can be performed during the AWs. This synchronization mechanism can align sequences between devices. When a device sends user data to a peer device, the devices need to negotiate and calculate common AWs. During the common AWs, the devices both switch to a same channel and send frames only in these AWs.

It can be learned that, in the distributed system established based on the NAN protocol, channel and slot allocation of each link in the system are negotiated by devices at two ends of the link, and available channels are centralized. When services on a plurality of links are performed at the same time, a channel interference probability between the plurality of links is higher. Because collaborative scheduling and anti-interference across an entire network cannot be implemented, an overall throughput of the network is limited.

In view of this, embodiments of this application provide a resource management method for a distributed system. In the method, a channel interference score and a service type of each device in the system are obtained, and an allocated channel is scheduled based on a channel capacity and a channel interference status. In this way, more device links can work on a channel with less interference, to reduce mutual interference between a plurality of links. Any device in the system detects that channel interference affects a service of the device, and may request another device in the system to switch to an alternative channel, to maximize anti-interference performance and a system capacity.

The resource management method provided in embodiments of this application may be applied to a plurality of distributed systems, for example, the distributed system shown in FIG. 1 or the distributed system shown in FIG. 2. For ease of differentiation, in this specification, the distributed system established based on the Wi-Fi P2P protocol in FIG. 1 may be referred to as a first-type distributed system, and the distributed system established based on the NAN protocol may be referred to as a second-type distributed system. It should be noted that the second-type distributed system is relative to the first-type distributed system. That is, roles of devices in the first-type distributed system are limited, and the devices are in a one-to-one relationship or a one-to-many relationship. Roles of devices in the second-type distributed system are equivalent, and the devices may be in a one-to-one relationship, a one-to-many relationship, or a many-to-many relationship. A method for establishing the second-type distributed system is not limited in embodiments of this application. For example, the second-type distributed system may be established based on the NAN protocol, or may be established based on the method provided in embodiments of this application. That is, devices discover each other based on Bluetooth or Wi-Fi, and establish a connection to a discovered device; and then negotiate, through an established communication channel, link information for establishing Wi-Fi direct communication with each other, and implement Wi-Fi direct communication between the devices based on the link information, to form the distributed system.

The technical solutions provided in embodiments of this application are applied to an electronic device, for example, any device that forms the distributed system 1 or the distributed system 2. The following describes the electronic device and embodiments for using such an electronic device. In some embodiments of this application, the electronic device may be a portable electronic device, such as a mobile phone, a PAD, a portable computer, a wearable device (such as a smartwatch, smart glasses, a smart band, or a smart helmet) with a wireless communication function, or a vehicle-mounted device. An example embodiment of the portable electronic device includes but is not limited to a portable electronic device using iOS^{®}, Android^{®}, Microsoft^{®}, or another operating system. It should be further understood that, in some other embodiments of this application, the electronic device may not be a portable device, for example, may be a desktop computer such as a PC, or may be a device such as a television.

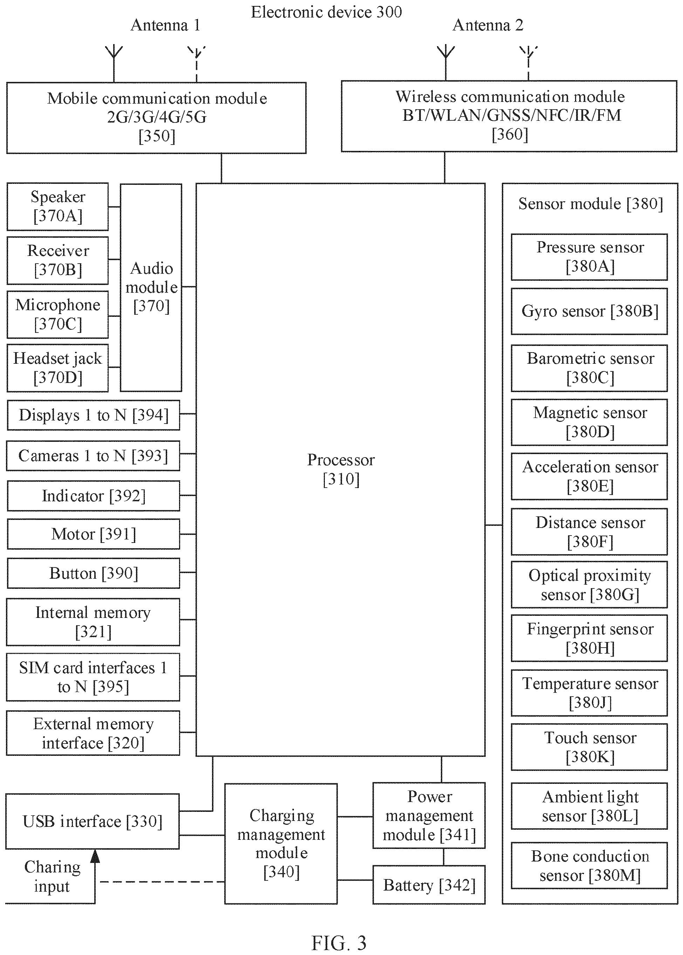

For example, FIG. 3 is a schematic diagram of a structure of an electronic device 300.

It should be understood that the electronic device 300 shown in the figure is merely an example, and the electronic device 300 may have more or fewer components than those shown in the figure, two or more components may be combined, or there may be different component configurations. The components shown in the figure may be implemented by hardware including one or more signal processing and/or application-specific integrated circuits, software, or a combination of hardware and software.

As shown in FIG. 3, the electronic device 300 may include a processor 310, an external memory interface 320, an internal memory 321, a universal serial bus (universal serial bus, USB) interface 330, a charging management module 340, a power management module 341, a battery 342, an antenna 1, an antenna 2, a mobile communication module 350, a wireless communication module 360, an audio module 370, a speaker 370A, a receiver 370B, a microphone 370C, a headset jack 370D, a sensor module 380, a button 390, a motor 391, an indicator 392, a camera 393, a display 394, a subscriber identification module (subscriber identification module, SIM) card interface 395, and the like. The sensor module 380 may include a pressure sensor 380A, a gyro sensor 380B, a barometric pressure sensor 380C, a magnetic sensor 380D, an acceleration sensor 380E, a distance sensor 380F, an optical proximity sensor 380G, a fingerprint sensor 380H, a temperature sensor 380J, a touch sensor 380K, an ambient light sensor 380L, a bone conduction sensor 380M, and the like.

Each part of the electronic device 300 is described below in detail with reference to FIG. 3.

The processor 310 may include one or more processing units. For example, the processor 310 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the electronic device 300. The controller may generate an operation control signal based on an instruction operation code and a time sequence signal, to complete control of instruction reading and instruction execution.

A memory may be further disposed in the processor 310, and is configured to store instructions and data. In some embodiments, the memory in the processor 310 is a cache memory. The memory may store instructions or data that has been used or cyclically used by the processor 310. If the processor 310 needs to use the instructions or the data again, the processor 310 may directly invoke the instructions or the data from the memory. This can avoid repeated access, reduce waiting time of the processor 310, and improve system efficiency.

The processor 310 may run an information sharing method provided in embodiments of this application. For example, an embodiment of this application provides a fast collaborative service (Fast Collaborative Service). The fast collaborative service may be a software module, the software module may run on the processor 310, and the software module may be understood as a computer program. For example, the software module may provide a system-level capability. An Android system is used as an example. From a perspective of a service, the software module may be placed in a system_server (system_server) process, and construct a basic platform capability together with modules such as an activity manager service (activity manager service, AMS), a package manager service (package manager service, PMS), or a window manager service (window manager service) in the system_server process. Alternatively, from an implementation perspective, in addition to the system_server process, the fast collaborative service may also be placed in another process. When different components are integrated in the processor 310, for example, a CPU and a GPU are integrated, the CPU and the GPU may cooperate to perform the method provided in embodiments of this application. For example, in the method provided in embodiments of this application, some algorithms are performed by the CPU, and the other algorithms are performed by the GPU, to achieve fast processing efficiency.

In some embodiments, the processor 310 may include one or more interfaces. For example, the interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 330 is an interface that conforms to a USB standard specification, and may be specifically a mini USB interface, a micro USB interface, a USB Type-C interface, or the like. The USB interface 330 may be configured to connect to a charger to charge the electronic device 300, or may be used to transfer data between the electronic device 300 and a peripheral device. The charging management module 340 is configured to receive a charging input from the charger. The power management module 341 is configured to connect to the battery 342, the charging management module 340, and the processor 310. The power management module 341 receives an input of the battery 342 and/or the charging management module 340, to supply power to the processor 310, the internal memory 321, an external memory, the display 394, the camera 393, the wireless communication module 360, and the like.

The I2C interface is a two-way synchronization serial bus, and includes one serial data line (serial data line, SDA) and one serial clock line (derail clock line, SCL). In some embodiments, the processor 310 may include a plurality of groups of I2C buses. The processor 310 may be separately coupled to the touch sensor 380K, a charger, a flash, the camera 393, and the like through different I2C bus interfaces. For example, the processor 310 may be coupled to the touch sensor 380K through the I2C interface, so that the processor 310 communicates with the touch sensor 380K through the I2C bus interface, to implement a touch function of the electronic device 300.

The mobile industry processor interface (mobile industry processor interface, MIPI) may be configured to connect the processor 310 to peripheral components such as the display 394 and the camera 393. The MIPIinterface includes a camera serial interface (camera serial interface, CSI), a display serial interface (display serial interface, DSI), and the like. In some embodiments, the processor 310 communicates with the camera 393 through the CSI interface, to implement a photographing function of the electronic device 300. The processor 310 communicates with the display 394 through the DSI interface, to implement a display function of the electronic device 300.

The GPIO interface may be configured by software. The GPIO interface may be configured as a control signal or a data signal. In some embodiments, the GPIO interface may be configured to connect the processor 310 to the camera 393, the display 394, the wireless communication module 360, the audio module 370, the sensor module 380, and the like. The GPIO interface may alternatively be configured as an I2C interface, an I2S interface, a UART interface, an MIPI interface, or the like.

A wireless communication function of the electronic device 300 may be implemented by using the antenna 1, the antenna 2, the mobile communication module 350, the wireless communication module 360, the modem processor, the baseband processor, and the like. The antenna 1 and the antenna 2 are configured to transmit and receive an electromagnetic wave signal. Each antenna in the electronic device 300 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 350 may provide a wireless communication solution that is applied to the electronic device 300 and that includes 2G/3G/4G/5G. The mobile communication module 350 may include at least one filter, a switch, a power amplifier, a low noise amplifier (low noise amplifier, LNA), and the like. The mobile communication module 350 may receive an electromagnetic wave through the antenna 1, perform processing such as filtering or amplification on the received electromagnetic wave, and transmit the electromagnetic wave to the modem processor for demodulation. The mobile communication module 350 may further amplify a signal modulated by the modem processor, and convert the signal into an electromagnetic wave for radiation through the antenna 1. In some embodiments, at least some function modules in the mobile communication module 350 may be disposed in the processor 310. In some embodiments, at least some function modules of the mobile communication module 350 may be disposed in a same device as at least some modules of the processor 310.

The wireless communication module 360 may provide a solution, applied to the electronic device 300, to wireless communication including a wireless local area network (wireless local area network, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 360 may be one or more components integrating at least one communication processor module. The wireless communication module 360 receives an electromagnetic wave through the antenna 2, performs frequency modulation and filtering processing on an electromagnetic wave signal, and sends a processed signal to the processor 310. The wireless communication module 360 may further receive a to-be-sent signal from the processor 310, perform frequency modulation and amplification on the signal, and convert the signal into an electromagnetic wave for radiation through the antenna 2.

In some embodiments, in the electronic device 300, the antenna 1 is coupled to the mobile communication module 350, and the antenna 2 is coupled to the wireless communication module 360, so that the electronic device 300 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

It may be understood that an interface connection relationship between the modules illustrated in this embodiment of this application is merely an example for description, and constitutes no limitation on the structure of the electronic device 300. In some other embodiments of this application, the electronic device 300 may alternatively use an interface connection manner different from that in the foregoing embodiment, or use a combination of a plurality of interface connection manners.

The electronic device 300 may implement a display function by using the GPU, the display 394, the application processor, and the like. The GPU is a microprocessor for image processing, and is connected to the display 394 and the application processor. The GPU is configured to perform mathematical and geometric computation, and render an image. The processor 310 may include one or more GPUs that execute program instructions to generate or change display information.

The display 394 is configured to display an image, a video, and the like. The display 394 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diode, QLED), or the like.

The electronic device 300 may implement a photographing function or an image capture function by using the ISP, the camera 393, the video codec, the GPU, the display 394, the application processor, and the like.

The ISP may be configured to process data fed back by the camera 393. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 393.

The camera 393 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP, to convert the electrical signal into a digital image signal. The ISP outputs the digital image signal to the DSP for processing. The DSP converts the digital image signal into an image signal in a standard format such as RGB or YUV. In some embodiments, the electronic device 300 may include one or N cameras 393, where N is a positive integer greater than 1.

The digital signal processor is configured to process a digital signal, and may process another digital signal in addition to the digital image signal. For example, when the electronic device 300 selects a frequency, the digital signal processor is configured to perform Fourier transformation on frequency energy.

The video codec is configured to compress or decompress a digital video. The electronic device 300 may support one or more video codecs. In this way, the electronic device 300 may play or record videos in various encoding formats, such as moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 300 may be implemented by the NPU, for example, image recognition, facial recognition, speech recognition, and text understanding.

The internal memory 321 may be configured to store computer-executable program code. The executable program code includes instructions. The internal memory 321 may include a program storage area and a data storage area. The program storage area may store an operating system, an application (for example, a sound playing function or an image playing function) required by at least one function, and the like. The data storage area may store data (such as audio data and a phone book) created during use of the electronic device 300, and the like. In addition, the internal memory 321 may include a high-speed random access memory, or may include a nonvolatile memory, for example, at least one magnetic disk storage device, a flash memory, or a universal flash storage (universal flash storage, UFS). The processor 310 runs instructions stored in the internal memory 321 and/or instructions stored in the memory disposed in the processor, to perform various function applications and data processing of the electronic device 300.

The external memory interface 320 may be used to connect to an external storage card, for example, a micro SD card, to extend a storage capability of the electronic device. The external memory card communicates with the processor 310 through the external memory interface 320, to implement a data storage function. For example, files such as images or videos are stored in the external storage card.

The electronic device 300 may implement an audio function, for example, music playing and recording, through the audio module 370, the speaker 370A, the receiver 370B, the microphone 370C, the headset jack 370D, the application processor, and the like.

The button 390 includes a power button, a volume button, and the like. The button 390 may be a mechanical button, or may be a touch button. The electronic device 300 may receive a button input, and generate a button signal input related to a user setting and function control of the electronic device 300. The motor 391 may generate a vibration prompt. The motor 391 may be configured to provide an incoming call vibration prompt and a touch vibration feedback. For example, touch operations performed on different applications (for example, photographing and audio playing) may correspond to different vibration feedback effects. A touch vibration feedback effect may be further customized. The indicator 392 may be an indicator light, and may be configured to indicate a charging status and a power change, or may be configured to indicate a message, a missed call, a notification, and the like. The SIM card interface 395 is configured to connect to a SIM card. The SIM card may be inserted into the SIM card interface 395 or detached from the SIM card interface 395, to implement contact with or separation from the electronic device 300.

It can be understood that the components shown in FIG. 3 do not constitute a specific limitation on the electronic device 300. The mobile phone may further include more or fewer components than those shown in the figure, or some components may be combined, or some components may be divided, or there may be different component arrangements. In addition, a combination/connection relationship between the components in FIG. 3 may also be adjusted and modified.

Embodiments of this application provide a plurality of devices. The plurality of devices may be same devices, for example, the electronic devices 300, or the plurality of devices may be different devices, for example, some of the plurality of devices are the electronic devices 300, and some of the plurality of devices are displays. Implementation forms of the plurality of devices are not limited in embodiments of this application. For example, all the plurality of devices may be electronic devices, or the plurality of devices may be chips in the electronic device, or some of the plurality of devices are electronic devices, and some of the devices are chips in the electronic device.

Embodiments of this application further correspondingly provide a distributed system. The distributed system may include at least two of the plurality of devices. Certainly, the distributed system may further include another device. Multi-screen collaboration, information sharing, and the like may be performed between any devices in the distributed system.

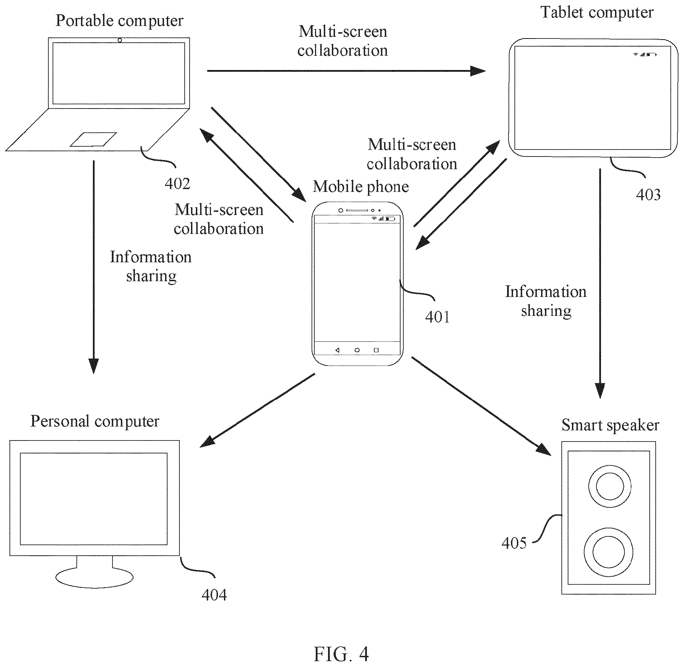

FIG. 4 is a schematic diagram of a distributed system. In FIG. 4, an example in which the distributed system includes five devices is used. It should be understood that the five devices are located in a same network. The five devices are a device 401, a device 402, a device 403, a device 404, and a device 405. The device 401, the device 402, the device 403, the device 404, and the device 405 may perform multi-screen collaboration, information sharing, or the like. For example, the device 401 may perform multi-screen collaboration or information sharing with the device 402 or the device 403, the device 402 may perform information sharing with the device 404, and the device 403 may perform information sharing with the device 405. For ease of understanding, in the following description process, an example in which the device 401 is a mobile phone, the device 402 is a portable computer, the device 403 is a tablet computer, the device 404 is a personal computer, and the device 405 is a smart speaker is used. A structure of the mobile phone is, for example, the structure shown in FIG. 3. The portable computer, the tablet computer, the personal computer, and the smart sound box may include more or fewer components than the structure shown in FIG. 3.

It should be understood that connections need to be established before a distributed service, for example, multi-screen collaboration or information sharing, is performed between the device 401, the device 402, the device 403, the device 404, and the device 405. That is, before any device needs to perform multi-screen collaboration or information sharing, the device may be connected to another possible device. That is, a plurality of devices are interconnected. In the following description, an example in which a plurality of devices in FIG. 4 discover each other based on Bluetooth or Wi-Fi, and establish a connection to a discovered device; and then negotiate, through an established communication channel, link information for establishing Wi-Fi direct communication with each other, and implement Wi-Fi direct communication between the devices based on the link information is used.

It should be understood that, after the plurality of devices are networked, any devices in the network collaborate with each other for a distributed application. This requires time synchronization between the devices in the distributed system. Therefore, after establishing Wi-Fi direct communication, the plurality of devices need to perform time synchronization. Because roles of the devices in the distributed system established in this embodiment of this application are equivalent, before time synchronization, one device may be selected from the plurality of devices in the distributed system as a primary device, and time of the primary device is used as a reference, to synchronize time of another device. The another device in the distributed system may be considered as a secondary device relative to the primary device, and the secondary device may perform synchronization according to the time of the primary device.

In a possible implementation, priority ranking may be performed on the plurality of devices in the distributed system, and a device with a highest priority is used as the primary device. If a set of all the devices in the distributed system is referred to as a domain, a device with a highest priority in the domain is the primary device. A manner of determining a priority is not limited in embodiments of this application.

In an example, a priority of a device may be determined based on one or more of a device type of each device, an endurance capability of the device, a hardware capability of the device, a protocol version used by the device, a quantity of devices connected to the device, and a MAC address of the device. The device type is, for example, a display, a PC, a tablet, a mobile phone, an IoT device, a smart speaker, or a wearable device. The endurance capability of the device is, for example, a remaining power level of the device, for example, high power, medium power, medium-low power, or low power. It should be noted that a quantity of levels of the remaining power levels is not limited in embodiments of this application, and each remaining power level may be predefined. For example, if remaining power i s greater than or equal to 70% of total power, the remaining power level is the high power; if remaining power is greater than or equal to 50% of the total power and less than 70% of the total power, the remaining power level is the medium power; if remaining power is greater than or equal to 30% of the total power and less than 50% of the total power, the remaining power level is the medium-low power; or if remaining power is less than 30% of the total power, the remaining power level is the low power. The hardware capability of the device is, for example, dual Wi-Fi chips or a single Wi-Fi chip used by the device. It should be noted that the device type, the endurance capability of the device, the hardware capability of the device, and the like are merely examples for description. Specific representation forms of the device type, the endurance capability of the device, and the hardware capability of the device are not limited in embodiments of this application.

Each device may report priority information of the device. For example, each device may report a ranking priority (ranking priority, RP) value of the device, and the RP value may indicate the priority information of the device. If the devices discover each other based on Bluetooth, the RP value may be carried in a first message. If the devices discover each other based on Wi-Fi, that is, the first message is generated based on a Wi-Fi protocol, the RP value may be carried in a synchronization beacon frame sent by each device. The RP value may occupy one field, or may occupy a plurality of fields. This is not limited in embodiments of this application. For example, content indicated by the RP value may occupy different bits in a same field; or content indicated by the RP value may occupy different fields.

For example, the RP value may include two parts. One part indicates a ranking level (ranking level), and the other part indicates a media access control (media access control, MAC) address of the device. The ranking level may include a device level, a protocol version number of the device, and a quantity of devices connected to the device. The device level further includes the device type, the endurance capability of the device, and the hardware capability of the device.

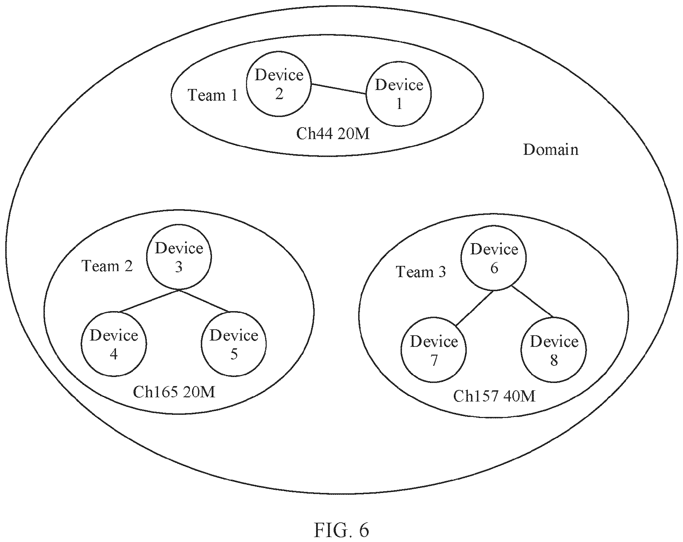

For example, FIG. 6 shows a frame structure carrying the first part of the RP value. That is, a ranking level field includes three fields, and the three fields are a device level field, a protocol version field, and a connection quantity field. It should be noted that specific names of the three fields are not limited in embodiments of this application. A quantity of bits occupied by each field is not limited in embodiments of this application. For example, for a definition of the device level field, refer to Table 1.

**Table 1**

| Field | Type | Value |
|---|---|---|
| 7-5 bits | Device type | 6: Display |
| | | 5: PC |
| | | 4: Tablet computer |
| | | 3: Mobile phone |
| | | 2: IoT device |
| | | 1: Speaker |
| | | 0: Wearable device |
| 4-2 bits | Endurance capability of the device | 3: High power (power is greater than or equal to 70%) |
| | | 2: Medium power (power is greater than or equal to 50% and less than 70%) |
| | | 1: Medium-low power (power is greater than or equal to 30% and less than 50%) |
| | | 0: Low power (power is less than 30%) |
| 1-0 bits | Hardware capability of the device | 1: Dual Wi-Fi chips |
| | | 0: Single Wi-Fi chip |

In embodiments of this application, the priorities of the devices may be determined according to the RP value reported by each device and based on the priority information of each device, for example, priorities of the device type, the endurance capability of the device, the hardware capability of the device, the protocol version used by the device, the quantity of devices connected to the device, and the MAC address of the device. That is, the priorities of the devices are preferentially determined based on the device type of each device. If it is determined, based on the device type of each device, that the priorities of the devices are consistent, the priorities of the devices may be determined based on the endurance capability of each device, and so on, until the priority of each device is determined. For example, the following operations may be performed in sequence: (1) Compare types of the devices, where a device with a highest device type is the primary device. If the types of the devices are the same, continue (2). (2) Compare the endurance capabilities of the devices, where a device with a highest endurance capability is the primary device. If the endurance capabilities of the devices are the same, continue (3). (3) Compare the hardware capabilities of the devices, where a device with a highest hardware capability is the primary device. If the hardware capabilities of the devices are the same, continue (4). (4) Compare the protocol versions of the devices, where a device with a latest version is the primary device. If the protocol versions of the devices are the same, continue (5). (5) Compare quantities of devices connected to the devices, where a device with a largest quantity of connections is the primary device. If the quantities of devices connected to the devices are the same, continue (6). (6) Compare the MAC addresses of the devices by bit, where a device with a highest MAC address is the primary device.

After the primary device is selected in the distributed system, the secondary device may perform time synchronization based on the time of the primary device. For example, the primary device actively notifies each secondary device of time information of the primary device. Each secondary device performs time synchronization based on the time information of the primary device. For another example, a secondary device may actively apply for time synchronization. For example, the secondary device that is to apply for time synchronization is a first secondary device. The first secondary device may actively broadcast a time synchronization request message, to request time synchronization with a device that has completed time synchronization in a same network. The primary device or another secondary device receives the time synchronization request message, and may send a response message for the time synchronization request message to the first secondary device. The response message may carry information used by the secondary device to perform time synchronization. The secondary device performs time synchronization with the primary device or the another secondary device based on the information carried in the response message.

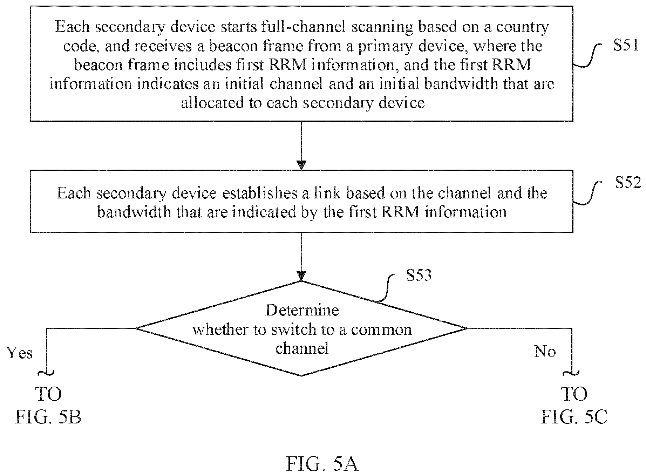

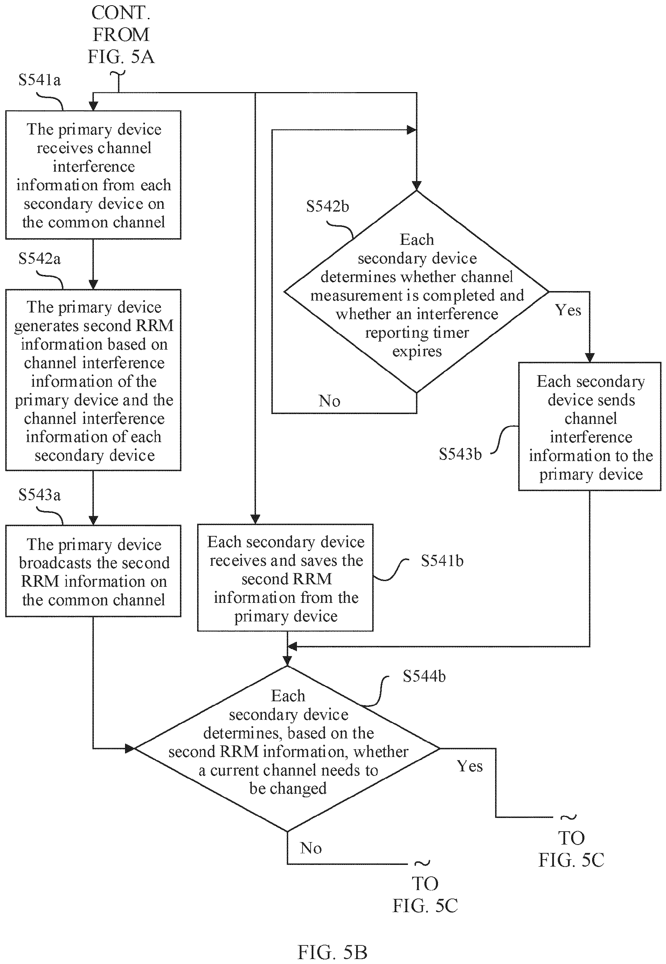

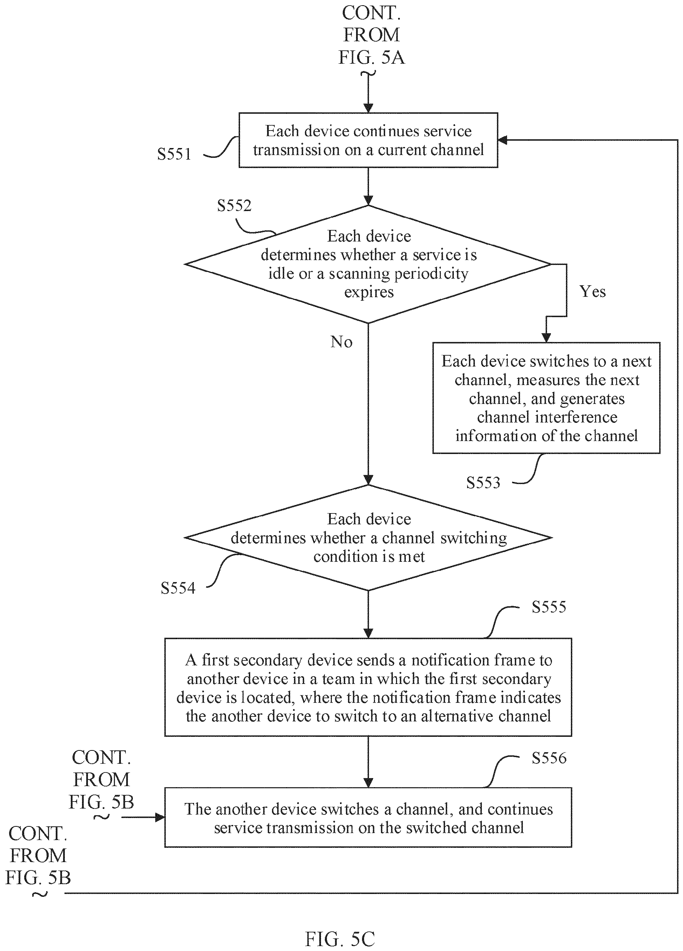

The technical solutions provided in embodiments of this application are described below with reference to the accompanying drawings. FIG. 5A to FIG. 5C show a procedure of a resource management method for a distributed system according to an embodiment of this application. The method may be applied to the first-type distributed system, the second-type distributed system, or another possible distributed system. The following description uses an example in which the method is applied to the network architecture shown in FIG. 4. It should be understood that the method relates to a plurality of devices, for example, the devices in FIG. 4. For ease of description, the following description uses an example in which the method relates to a first device and a plurality of devices. The first device is a primary device relative to the plurality of devices, and the plurality of devices are secondary devices.

S51: Each secondary device starts full-channel scanning based on a country code, and receives a beacon (beacon) frame from the primary device. The beacon frame includes first radio resource management (radio resource management, RRM) information, and the first RRM information indicates an initial channel and an initial bandwidth that are allocated to each secondary device.

In this embodiment of this application, a set formed by all devices that can discover each other in a near field is referred to as a domain, and all the devices in the domain may form a distributed system. A device in the domain is the primary device. All devices other than the primary device are referred to as secondary devices. The plurality of devices in the domain can be interconnected. A set of devices connected together is referred to as a group or a team (this specification uses a team as an example). Generally, all devices in a team may work on one channel to reduce frequency hopping overheads, or may work on a plurality of channels. A primary device in the domain allocates a channel and a bandwidth to each secondary device, and notify each secondary device. For example, the primary device may broadcast the beacon frame on a common channel (common channel). The beacon frame includes a first RRM list, and indicates the initial channel and the initial bandwidth that are allocated to each secondary device. The common channel may be a predefined channel. For example, a common channel of 5G is a Ch165 channel (20M bandwidth), and a common channel of 2.4G is a Ch13 channel (20M bandwidth). The common channel may also be a social channel. The following uses an example in which the common channel is a social channel. To avoid a deviation of a synchronization mechanism, the primary device may broadcast the beacon frame at 8 ms of the common channel. After establishing a connection, each device may start full-channel scanning based on a country code, to determine channels. Further, each device establishes a link on a channel and a bandwidth of the device based on an indication of the first RRM information. It should be noted that the primary device may also schedule a spectrum resource that uses OFDMA26 subcarriers (2.5 MHz) of Wi-Fi 6 as a minimum bandwidth. It should be noted that, in this specification, Ch means a channel.

For ease of understanding, FIG. 6 is a schematic diagram of a distributed system. For example, in FIG. 6, eight devices are included. The eight devices are in a same domain. Among the eight devices, a device 1 and a device 2 are interconnected to form a team 1, a device 3, a device 4, and a device 5 are interconnected to form a team 2, and a device 6, a device 7, and a device 8 are interconnected to form a team 3. It should be noted that if services of devices in a plurality of teams need to perform exchange, the plurality of teams form a new team. For example, if services of the device 1 in the team 1 and the device 3 in the team 2 need to perform exchange, the team 1 and the team 2 are combined into one team. A primary device in the domain may allocate a channel to each team. Assuming that the device 1 is the primary device in the domain, the primary device may allocate different channels to the team 1, the team 2, and the team 3. For example, the primary device may schedule the team 1 to use a channel 165 (that is, Ch165) and a bandwidth of 20 MHz, schedule the team 2 to use a channel 48 (that is, Ch48) and a bandwidth of 40 MHz, and schedule the team 3 to use a channel 157 (that is, Ch157) and a bandwidth of 40 MHz.

The primary device may generate the first RRM list based on the channel and the bandwidth that are allocated to each secondary device. The first RRM list may include information about an initial channel and an initial bandwidth that are allocated to each device in the domain, and device information in each team. For example, Table 2 shows an implementation of the first RRM information.

**Table 2 First RRM information**

| Team number | Channel and bandwidth | Identity of a device 1 | Identity of a device 2 | ... | Identity of a device N |
|---|---|---|---|---|---|
| 1 | Ch44 40M | Device 1 | Device 2 | / | / |
| 2 | Ch165 20M | Device 3 | Device 4 | / | Device 5 |
| 3 | Ch157 40M | Device 6 | Device 7 | / | Device 8 |

It should be understood that, in this specification, Ch represents a channel, and a country code is a number of a specified available channel, for example, 44, 165, or 157 in Table 1. After the plurality of devices are interconnected to form the distributed system, the primary device in the distributed system may generate the RRM information shown in Table 1, and broadcast a beacon frame carrying the first RRM information. A possible structure of the beacon frame is described below, and is not described herein.

S52: Each secondary device establishes a link based on the channel and the bandwidth that are indicated by the first RRM information.

Each secondary device receives the beacon frame from the primary device, and may establish a link with another device based on the channel and the bandwidth that are indicated by the first RRM information carried in the beacon frame, to perform a service on the established link. The example in Table 1 is still used. The device 3 is used as an example. The device 3 receives a beacon frame from the device 1. It can be learned from the beacon frame that the device 3, the device 4, and the device 5 are located in the team 2, and a channel and a bandwidth allocated to the device 3 are Ch165 20M. In this case, the device 3 may establish links to the device 4 and the device 5 on Ch165 20M.

It should be understood that after initial link establishment, after the primary device allocates a channel and a bandwidth to each secondary device, because an interference status on a link of each secondary device changes and a service performed on the link of each secondary device changes, a channel initially allocated to the secondary device may be no longer suitable for transmission of a current service. The example in FIG. 6 is still used, and the device 3, the device 4, and the device 5 in the team 2 all work on Ch165 20M. In the distributed system shown in FIG. 6, as respective services of the three teams change and interference between the teams changes, Ch165 20M initially allocated to the team 2 may not be optimal. In this case, the primary device may reschedule a channel allocated to each device by comprehensively considering a channel interference status on each link of each device and a capacity of each channel in the distributed system. In this way, a plurality of links can work on channels with less interference to avoid mutual interference. In this case, the primary device needs to measure the channels, and each secondary device needs to measure the channels, and report a channel interference status determined after measurement to the primary device. In this embodiment of this application, a channel to be measured by each team may be predefined, and each device in the team may cyclically measure the predefined channel. A team owner in each team may notify, through broadcasting, each device in the team of a to-be-measured channel, which is more flexible.

Generally, interference to each channel changes randomly. Therefore, in this embodiment of this application, an interference reporting timer may be set. Each secondary device may start to send the channel interference status to the primary device when the interference reporting timer expires. In this way, the primary device may obtain interference statuses of the channels in a same time period, so that the primary device can accurately schedule a channel allocated to each secondary device. In addition, each device performs service transmission based on an initially established link, and cyclically measures a predefined channel. The primary device needs to measure a channel on which service transmission is performed, also needs to receive a channel interference status reported by each secondary device, and reschedules each channel, to allocate a channel with less interference to each secondary device. The secondary device needs to measure a channel on which service transmission is performed, report a measured channel interference status to the primary device, and receive scheduling from the primary device.

For ease of management, common information and a service channel may be defined in this embodiment of this application. The common channel is used by the secondary device to report a channel interference status and used by the primary device to receive the channel interference status from the secondary device. Certainly, the primary device sends the RRM information to each secondary device on the common channel. The service channel is relative to the common channel, and may be used by each device to transmit service data, measure channel interference, and the like. Certainly, some secondary devices may switch from one channel to another channel based on scheduling by the primary device based on the RRM information. Channel switching is performed on the service channel. In this way, the primary device collects a channel interference status of each secondary device, and delivers RRM information of each secondary device to each secondary device. This does not affect a normal service performed by each device.

The primary device may periodically collect a channel interference status from each secondary device, or the secondary device may report a channel interference status of the secondary device to the primary device within a preset time period. In this way, the channel interference status of each secondary device obtained by the primary device may represent an interference status of each channel in a same time period, so that the primary device can accurately schedule a channel allocated to each secondary device. Therefore, in this embodiment of this application, a channel switching timer may be set. When the channel switching timer expires, each device switches to a common channel. Otherwise, each device works on a service channel.

S53: Determine whether to switch to a common channel.

If the common channel is switched to, the primary device performs S541a to S543a, and the secondary device performs S541b to S544b. If the common channel is not switched to, each device performs S551 to S556.

It should be understood that, on the common channel, the primary device and the secondary device perform different procedures because of different roles. The primary device mainly collects the channel interference status of each secondary device, and generates second RRM information based on the collected channel interference status, to reschedule each channel, so that a channel with less interference is allocated to each secondary device. The secondary device mainly reports, to the primary device, a channel interference status obtained by measuring a channel, and performs service transmission based on scheduling by the primary device. However, on the service channel, the procedures performed by the primary device and the secondary device are not different because of different roles of the primary device and the secondary device. The following separately describes in detail procedure steps of the primary device and the secondary device on the common channel, and procedure steps of all devices on the service channel.

S541a: The primary device receives channel interference information from each secondary device on the common channel.

The channel interference information may indicate a degree of interference to a channel. For example, the channel interference information may be a channel interference score. A higher interference score of a channel may indicate less interference to the channel, a higher throughput, and a shorter delay (this is used as an example in this embodiment of this application). Certainly, in some embodiments, it may also be defined that a lower interference score of a channel indicates less interference to the channel. For ease of description, this specification uses an example in which a full score of a channel interference score is 100. If an interference score of a channel is 100, the channel has no interference.

Each secondary device may cyclically measure each predefined channel or cyclically measure each notified channel on the service channel, obtain one or more interference parameters of the measured channel, and determine an interference score of each channel based on the plurality of interference parameters of each measured channel. Certainly, the primary device also cyclically measures each predefined channel on the service channel, and determines an interference score of each channel based on a plurality of interference parameters of each measured channel.

An interference parameter of a channel may represent an interference status of the channel, for example, includes one or more of a received signal strength indicator (received signal strength indicator, RSSI), a signal-to-noise ratio (signal noise ratio, SNR), and signal background noise, or another parameter that may represent the interference status of the channel. Each secondary device may extract features of one or more interference parameters of the channel, and determine the interference status based on the extracted features. For example, a model of the channel interference parameter and a channel interference score may be established by using a neural network, and the channel interference score is determined based on the model. It should be noted that a specific method for establishing the model of the channel interference parameter and the channel interference score is not limited in this embodiment of this application. After extracting the features of the one or more interference parameters of the channel, each secondary device may input extracted feature values into the model of the channel interference parameter and the channel interference score, to determine the channel interference score.

For example, the channel interference score determined by each secondary device may be shown in Table 3. In Table 3, five channels (Ch) and two bandwidths (bandwidth, BW) are used as an example.

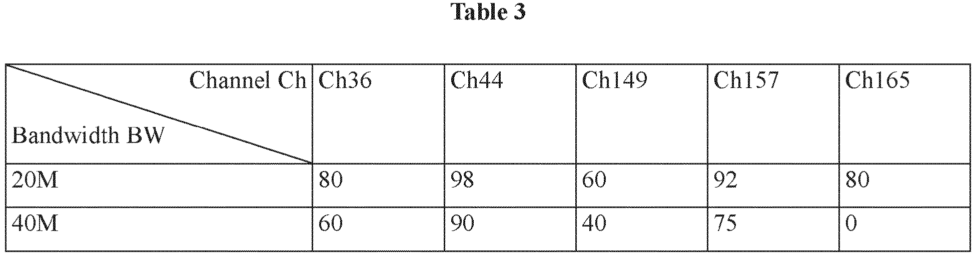

It should be noted that "0" in Table 3 indicates that a channel and a bandwidth are not measured and are not involved in calculation of a channel interference score.

Considering that a value of a channel interference parameter changes randomly, a channel interference score obtained by calculation based on a current value of the channel interference parameter is instantaneous. Therefore, in some embodiments, a proper channel interference score may be obtained by comprehensively considering the current instantaneous channel interference score and a previous channel interference score. For ease of description, the previous channel interference score may be referred to as a first channel interference score, the current instantaneous channel interference score may be referred to as a second channel interference score, and a proper channel interference score may be referred to as a target channel interference score. For example, target channel interference score=first weight×first channel interference score+second weight×second channel interference score. Specific values of the first weight and the second weight are not limited in this embodiment of this application. For example, the first weight may be equal to 1/2, and the second weight may also be equal to 1/2.

After determining the channel interference score, each secondary device may generate the channel interference information, and send the channel interference information to the primary device. In this way, the primary device can obtain the interference status of each channel in the system, to preferentially schedule a channel with less interference for each secondary device.

It should be understood that the channel interference information is used to assist the primary device in scheduling an available channel for each secondary device. The channel interference information may include a channel interference score, or may include an interference duty cycle, or may include a current transmission rate of the channel. Alternatively, the channel interference information may include one or more of a channel interference score, an interference duty cycle, and a current transmission rate of the channel. This is not limited in this embodiment of this application. It should be noted that the current transmission rate of the channel may be a predefined rate. For example, transmission rates of devices of different standards in different bandwidths may be measured in advance, and transmission rates of devices of different standards in different bandwidths are defined based on the measured transmission rates. In this case, the primary device may learn of the current transmission rate of each channel according to the predefinition, and each secondary device does not need to report the current transmission rate of each channel to the primary device. Certainly, each secondary device may also calculate the current transmission rate of the channel based on an RSSI corresponding to the channel, and report the current transmission rate to the primary device.

The interference duty cycle is calculated as follows: (total channel measurement time-packet sending time-packet receiving time-channel idle time)/total channel measurement time. For example, Table 4 shows interference duty cycles of channels.

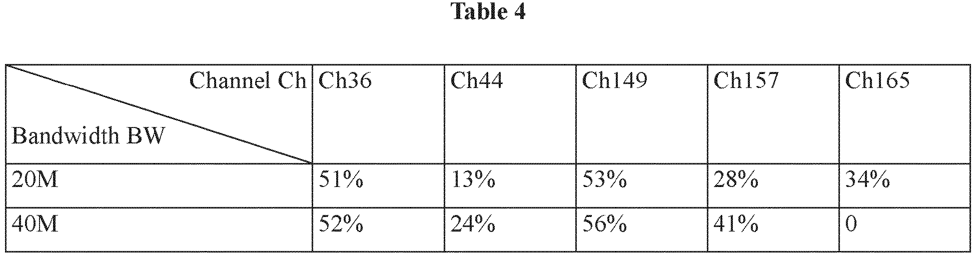

To enable the primary device to collect a channel interference status of each secondary device in a same time period, to schedule a channel allocated to each secondary device more accurately, and minimize interference between devices, in this embodiment of this application, an interference reporting timer may be set, and each secondary device sends the channel interference information to the primary device on the common channel when the interference reporting timer expires.

For example, each secondary device contends on the common channel to send respective channel interference information to the primary device. However, a duration of the common channel is limited. If there are a large quantity of secondary devices, it cannot be ensured that all secondary devices can complete reporting of the channel interference information within the limited duration of the common channel. Therefore, in some embodiments, a timing duration of the interference reporting timer may be divided into a plurality of durations, and each duration is used by a part of secondary devices to report respective channel interference information. For example, there are 20 secondary devices, and the timing duration of the interference reporting timer may be divided into a first duration and a second duration. The first duration is used by 10 secondary devices to report respective channel interference information, and the second duration is used by the other 10 secondary devices to report respective channel interference information. That is, when the first duration of the interference reporting timer expires, the 10 secondary devices report respective channel interference information, and when the second duration of the interference reporting timer expires, the other 10 secondary devices report respective channel interference information. In this way, the information interference information reported by the secondary devices can be staggered as much as possible, to ensure transmission quality.

It should be noted that a specific implementation of reporting the information interference information by the secondary devices is not limited in this embodiment of this application. For example, in some embodiments, a team owner may be selected for each team, and other secondary devices in the team may send respective channel interference information to the team owner on service channels. Then, the team owner sends the channel interference information to the primary device on the common channel.

S542a: The primary device generates the second RRM information based on channel interference information of the primary device and the channel interference information of each secondary device.

After receiving the channel interference information from each secondary device, the primary device may generate the second RRM information based on the channel interference information of the primary device and the channel interference information of each secondary device. The second RRM information may indicate a channel and a bandwidth that are reallocated to the primary device and each secondary device.

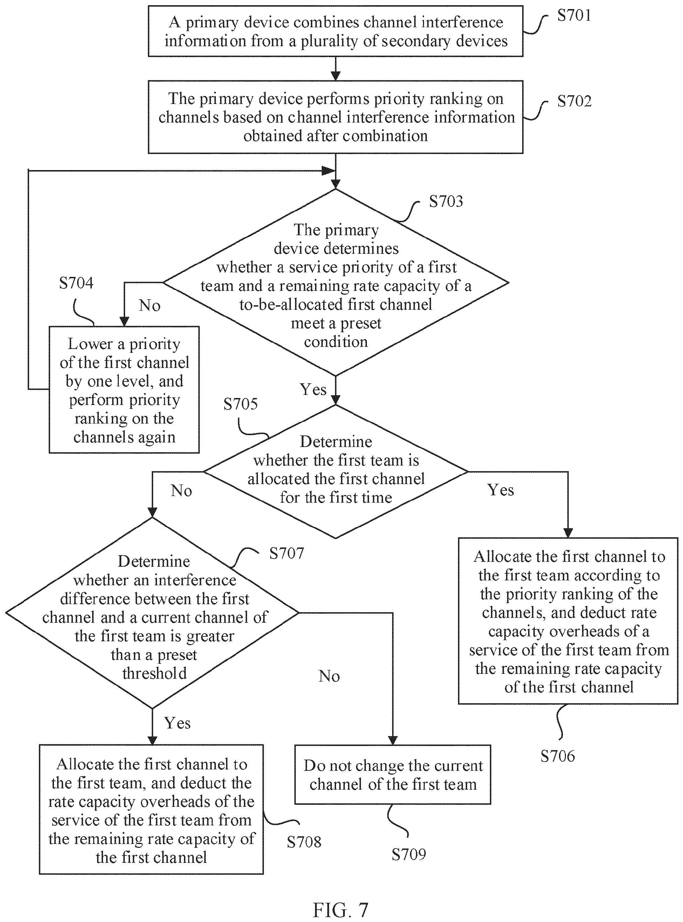

Because each secondary device contends on the common channel to send respective channel interference information to the primary device, to minimize a delay, the primary device may process preferentially received channel interference information. In a possible implementation, FIG. 7 shows detailed procedure steps of S542a.

S701: The primary device combines the channel interference information from the plurality of secondary devices.

In an example, the primary device may preferentially combine two pieces of first received channel interference information, to obtain combined channel interference information, and then, combine newly received channel interference information and the combined channel interference information until all received channel interference information is combined. For example, the primary device preferentially receives first channel interference information from a first secondary device and second channel interference information from a second secondary device. The primary device may combine the first channel interference information and the second channel interference information, to obtain first combined channel interference information. Then, the primary device receives third channel interference information from a third secondary device, and the primary device combines the first combined channel interference information and the third channel interference information, to obtain second combined channel interference information. By analogy, the primary device combines all channel interference information, to obtain final channel interference information.

Combining channel interference information is combining same factors in different channel interference information. For example, the channel interference information includes a channel interference score. Combining different channel interference information is combining channel interference scores of a same channel in different channel interference information. For example, channel interference scores of a same channel in the first channel interference information and the second channel interference channel may be combined. That is, the channel interference scores are averaged. It should be noted that, if a channel interference score of a channel is 0, it indicates that the channel is not measured. Therefore, when a channel interference score is 0, the channel interference score is directly combined and is not averaged. If the channel interference information includes an interference duty cycle, combining of the interference duty cycles is the same as combining of the channel interference scores. Details are not described herein again.

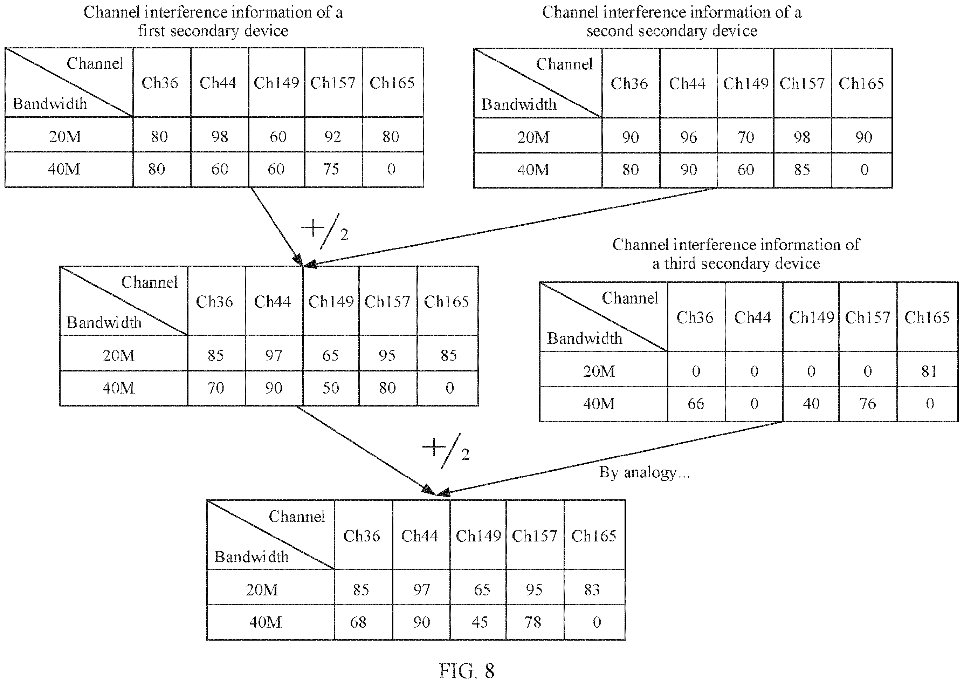

For ease of understanding, FIG. 8 is a schematic diagram of combining the channel interference information of the secondary devices by the primary device. In FIG. 8, combining channel interference scores in the channel interference information is used as an example. In FIG. 8, an example in which the primary device preferentially receives the channel interference information from the first secondary device and the second secondary device, and then receives the channel interference information from the third secondary device is used.

In another example, the primary device may combine the received channel interference information of the secondary devices at a time. For example, channel interference scores of all channels included in all the secondary devices are combined. For any channel, the primary device may average channel interference scores of all the secondary devices for the channel. Certainly, in some embodiments, considering differences between the channels, the channel interference information may be combined with reference to weights of the channels. A specific implementation of combining the channel interference information is not limited in this embodiment of this application.

S702: The primary device performs priority ranking on the channels based on the channel interference information obtained after combination.

The primary device may comprehensively consider an interference status of a channel measured by each secondary device, to schedule a proper channel for each secondary device. In a possible implementation, the primary device may perform priority ranking on to-be-scheduled channels based on the channel interference information obtained after combination. For example, the primary device may rank channel interference scores in descending order, to perform priority ranking on the to-be-scheduled channels. A higher channel interference score indicates less interference to a channel and a higher scheduled priority of the channel. It should be understood that a scheduled priority means that scheduling is performed preferentially. The primary device may reschedule the channels according to the ranked channels. For example, the primary device may generate new RRM information based on the final channel interference information. The new RRM information includes a team number of a team in which each secondary device is located, and a channel and a bandwidth allocated to each team.

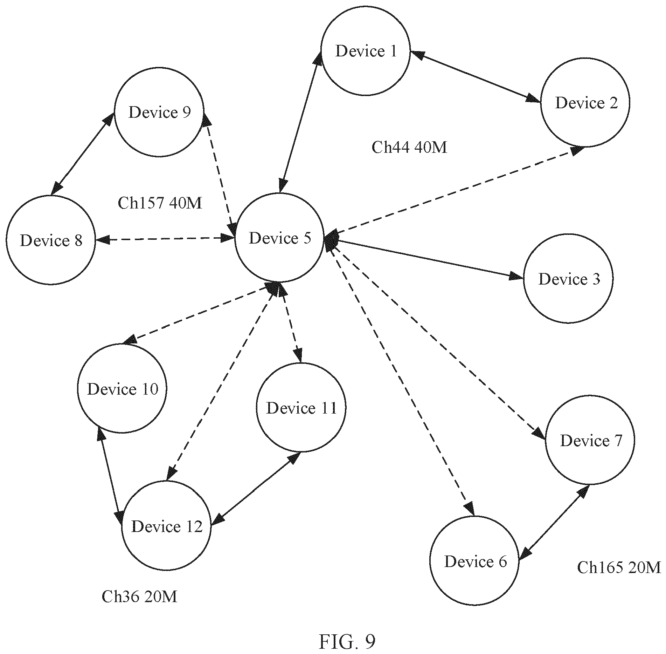

For example, FIG. 9 is a schematic diagram of a network architecture of a distributed system. In FIG. 9, an example in which 11 devices are included and a device 5 is a primary device is used. In FIG. 9, a solid line indicates that two devices are actually interconnected (communicate), and a dashed line indicates that two devices are actually not interconnected, but can receive a beacon frame sent by the primary device. The 11 devices in FIG. 9 may be grouped into four teams. For ease of understanding, the four teams in FIG. 9 are referred to as a team 1, a team 2, a team 3, and a team 4. The team 1 includes a device 1, a device 2, a device 3, and the device 5. The team 2 includes a device 6 and a device 7. The team 3 includes a device 8 and a device 9. The team 4 includes a device 10, a device 11, and a device 12.

The device 5 performs priority ranking on channels (for example, Ch36 20M, Ch36 40M, Ch44 40M, Ch48 80M, Ch149 40M, Ch157 40M, and Ch165 20M) based on channel interference information reported by the device 5 and devices other than the device 5. It is assumed that the channels are ranked based on channel interference scores, and a sequence after ranking is, for example, shown in Table 5.

**Table 5**

| Team number | Channel and bandwidth | Identity of a device 1 | Identity of a device 2 | ... | Identity of a device N |
|---|---|---|---|---|---|
| 1 | Ch44 40M | Device 1 | Device 2 | / | Device 5 |
| 2 | Ch165 20M | Device 6 | Device 7 | / | / |
| 3 | Ch157 40M | Device 8 | Device 9 | / | / |
| 4 | Ch36 20M | Device 10 | Device 11 | / | Device 12 |
| 5 | Ch149 40M | Alternative channel of the team 1 | | | |
| 6 | Ch36 40M | Alternative channel of the team 2 | | | |
| 7 | Ch48 80M | Common alternative channel | | | |

The channels in Table 5 are ranked based on priorities, and a channel with a higher priority is preferentially scheduled. It should be noted that Table 5 further shows alternative channels of each team. A channel that is not allocated after priority ranking may be considered as an alternative channel. When frame freezing of a service or severe interference occurs on any team, the team may switch to an alternative channel. Certainly, different teams may also switch to alternative channels based on priorities. For example, Ch 149 40M may be considered as an alternative channel of the team 1, Ch36 40M may be considered as an alternative channel of the team 2, and Ch48 80M may be considered as a common alternative channel. It should be understood that the common alternative channel is different from the common channel described above. A priority of the common alternative channel is lower than that of an alternative channel of any team. For example, the device 5 may notify each device on the common channel that the device 1, the device 2, the device 3, and the device 5 are in the team 1, and when frame freezing of a service occurs, the team 1 preferentially switches to the alternative channel of the team 1, that is, Ch149 40M. If service freezing still occurs after the team 1 switches to the alternative channel of the team 1, the team 1 may switch to the common alternative channel. Similarly, the device 6 and the device 7 are located in the team 2. When frame freezing of a service occurs, the team 2 preferentially switches to the alternative channel of the team 2, that is, Ch36 40M. If service freezing still occurs after the team 2 switches to the alternative channel of the team 2, the team 2 may switch to the common alternative channel. When frame freezing occurs, the team 3 and the team 4 may switch to the alternative channel of the common channel, that is, Ch48 80M, because there is no corresponding alternative channel for the team 3 and the team 4. It should be noted that, Table 5 uses an example in which there is no alternative channel of the team 3 or the team 4. In some embodiments, there may also be an alternative channel of the team 3 or the team 4. For example, there are more channels. In this case, there may also be an alternative channel of the team 3 or the team 4.

It should be understood that channel scheduling is also affected if actual service requirements of devices in each team are different; or a quantity of devices in each team also affects channel scheduling; or channel scheduling is also affected if remaining rate capacities of channels in each team are different. For example, if a priority of a service is higher, it may be considered that an amount of data transmitted by the service is large, and a rate capacity of a corresponding channel is also large. Therefore, a channel with less interference is preferentially allocated to a team with a higher priority. Certainly, if a remaining capacity of a channel is insufficient to meet a service transmission requirement in a team, the channel is not allocated to the team even if the channel is ranked in the front (that is, even if interference to the channel is small), to reduce impact of the channel on a service of each team and ensure that the service of each team is performed normally. Therefore, in this embodiment of this application, in addition to performing priority ranking on the channels based on the channel interference scores, priority ranking may be further performed on the channels based on priorities of services of the teams and/or remaining rate capacities of the channels. Alternatively, priority ranking may be performed on the channels with reference to a total rate capacity of each channel.

In this embodiment of this application, priorities may be predefined for various services. In an example, Table 6 is a schematic table of service priorities. It should be noted that Table 6 is merely an example. If a device has a plurality of services at the same time, priorities of the plurality of services are respective highest priorities among priorities corresponding to the services.

**Table 6**

| Priority | 1 | 2 | 3 | 4 | 5 | 6 | ... | Lowest |
|---|---|---|---|---|---|---|---|---|
| Application/service | 4K 60 fps projection | 1K 60 fps projection | 4K 30 fps projection | 1K 30fps projection | Online game | File share | ... | Keepalive |

A total rate capacity of a channel may be calculated based on a physical layer rate and interference. For example, the total rate capacity of the channel is obtained by multiplying a rate estimated based on an RSSI by (1-interference duty cycle). A remaining rate capacity of a channel may be estimated based on a service type, or may be notified by an application layer. For example, for a 1-channel 1-to-1 1080P 60 fps projection service, the application layer may notify a physical layer that rate capacity overheads of the service need to occupy, for example, 84 Mbps. It should be noted that there is a possible scenario in which there is a connection but no service link between devices, which is also referred to as a keep-alive scenario. In this embodiment of this application, it may be predefined that rate capacity overheads in the keep-alive scenario are 2 Mbps (this is used as an example in this specification), or another possible value.

S703: The primary device determines whether a service priority of a first team and a remaining rate capacity of a first channel to be allocated to the first team meet a preset condition, where the first channel is a channel to be allocated to the first team.

The primary device may preferentially allocate a high-priority channel to each team in descending order of service priorities based on the priority ranking of the channels. However, a remaining rate capacity of a channel allocated to a team (for example, the first team) may be insufficient to support a service of the first team. To ensure that a channel allocated to each team can support a service of each team, after allocating the channel to each team, the primary device may determine whether a service priority of each team and a remaining capacity of the channel scheduled for each team meet the preset condition. For ease of description, only the first team is used as an example. It should be understood that any team is the same as the first team. For example, for a second team, the primary device may determine whether a service priority of the second team and a remaining rate capacity of a second channel meet a preset condition. The second channel is a channel to be allocated to the second team.

S704: If the preset condition is not met, the primary device lowers a priority of the first channel by one level, and performs priority ranking on the channels again.

The preset condition may be that the service priority of the first team is a high priority, and the remaining capacity of the first channel is sufficient to meet a current service requirement of the team. To minimize interference, if the service priority of the first team is a high priority, and the remaining rate capacity of the first channel is sufficient for a service requirement of the first team, a to-be-scheduled channel may be allocated to the first team. If the service priority of the first team is not a high priority, or the remaining rate capacity of the first channel is insufficient to meet the current service requirement, a channel with high interference may be allocated, to reduce impact on the service of the first team. For example, a channel of a next priority may be preferentially allocated.

In this embodiment of this application, Table 4 may be updated based on a service priority of each team and a quantity of devices in each team, so that a channel with less interference is preferentially allocated to a service with a high throughput and low delay requirement, a channel with high interference is allocated to a service with a low throughput and low delay requirement, and by analogy, a channel with higher interference is allocated to a service with a low throughput and high delay requirement. In this embodiment of this application, Table 4 may be further updated with reference to rate capacity overheads required by a service in each team. When a rate capacity is sufficient, a same frequency and a same channel are allocated to nodes in a same team, to save frequency domain resource overheads. It should be understood that, after a channel is allocated to a team, rate capacity overheads required by a service of the team should be subtracted from a remaining rate capacity of the channel.

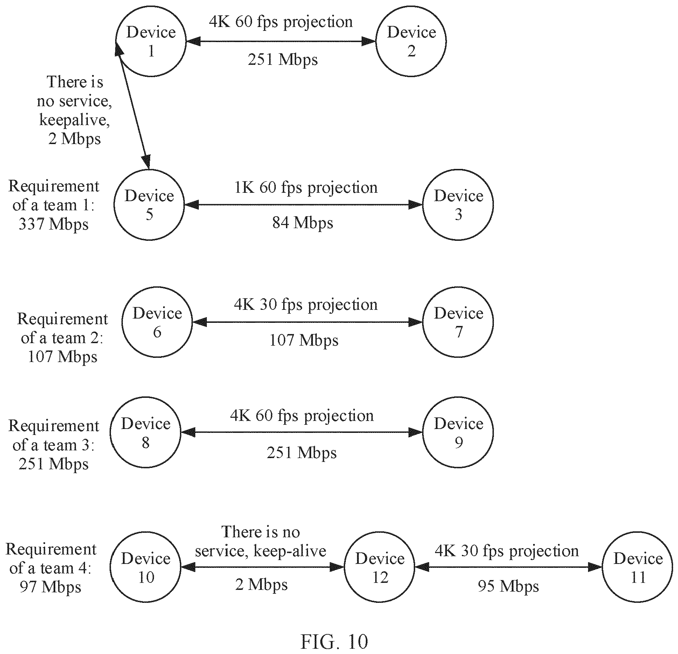

For ease of understanding, FIG. 10 shows a service type of each team in FIG. 9 and a rate requirement of a service of each team. As shown in FIG. 10, a service between the device 1 and the device 2 in the team 1 is a 4K 60 fps projection service, and requires a rate supported by a channel to be greater than or equal to, for example, 251 Mbps. There is no service between the device 5 and the device 1 in the team 1, but it is a keep-alive scenario, and a rate supported by a channel is required to be greater than or equal to, for example, 2 Mbps. A service between the device 5 and the device 3 in the team 1 is a 1K 60 fps projection service, and requires a rate supported by a channel to be greater than or equal to, for example, 2 Mbps. A service between the device 5 and the device 3 in the team 1 is a 1K 60 fps projection service, and requires a rate supported by a channel to be greater than or equal to, for example, 84 Mbps. In this case, the services of the devices in the team 1 require a rate supported by a channel to be greater than or equal to 251 Mbps+2 Mbps+84 Mbps, that is, 337 Mbps. Similarly, a service between the device 6 and the device 7 in the team 2 is a 4K 30 fps projection service, and requires a rate supported by a channel to be greater than or equal to, for example, 107 Mbps. In this case, the service of the devices in the team 2 requires a rate supported by a channel to be greater than or equal to 107 Mbps. A service between the device 8 and the device 9 in the team 3 is a 4K 60 fps projection service, and requires a rate supported by a channel to be greater than or equal to, for example, 251 Mbps. In this case, the service of the devices in the team 3 requires a rate supported by a channel to be greater than or equal to 251 Mbps. There is no service between the device 10 and the device 11 in the team 4, but it is a keepalive scenario, and a rate supported by a channel is required to be greater than or equal to, for example, 2 Mbps. A service between the device 11 and the device 12 in the team 4 is a 4K 30 fps projection service, and requires a rate supported by a channel to be greater than or equal to 95 Mbps. In this case, the services of the devices in the team 4 require a rate supported by a channel to be greater than or equal to 2 Mbps+95 Mbps, that is, 97 Mbps. That is, the teams in FIG. 10 in descending order of priorities are: the team 1, the team 3, the team 2, and the team 4. Service priorities of the team 1 and the team 3 are the same, and service priorities of the team 2 and the team 4 are the same. The teams in descending order of rates that are supported by the channels and that are required by the services are: the team 1, the team 3, the team 2, and the team 4.

It is assumed that a priority ranking of the channels is shown in Table 6. The primary device may sequentially allocate Ch44 40M to the team 1, Ch165 40M to the team 2, Ch157 40M to the team 3, and Ch36 20M to the team 4 based on Table 6.

In some embodiments, the primary device may allocate a channel to each team with reference to the priority ranking of the channels and the service priority of each team. The service priority of the team 3 is the same as that of the team 1, both of which are higher than that of the team 2 and that of the team 4. The service priority of the team 2 is the same as that of team 4. Therefore, the priority ranking of the channels may be adjusted. For example, the adjusted priority ranking of the channels is: Ch44 40M, Ch157 40M, Ch165 20M, Ch36 20M, Ch149 40M, Ch36 40M, and Ch48 80M. That is, Ch44 40M may be preferentially allocated to the team 1, Ch165 20M is allocated to the team 3, Ch157 40M is allocated to the team 2, Ch36 20M is allocated to the team 4, Ch149 40M is used as an alternative channel of the team 1, Ch36 40M is used as an alternative channel of the team 2, and Ch48 80M is used as a common alternative channel. That is, according to the service priorities, the priority ranking of the channels is: Ch44 40M, Ch157 40M, Ch165 20M, Ch36 20M, Ch149 40M, Ch36 40M, and Ch48 80M.

Alternatively, the primary device may also allocate a channel to each team with reference to the priority ranking of the channels, a priority of a service of each team, a total rate capacity of the channel, and a remaining rate capacity of the channel.

For example, Table 7 is a schematic table of total rate capacities and remaining rate capacities of channels in the system.

**Table 7**

| Team number | Channel and bandwidth | Total rate capacity/Mbps | Remaining rate capacity/Mbps |
|---|---|---|---|
| 1 | Ch44 40M | 350 | 13 |
| 2 | Ch165 20M | 150 | 43 |
| 3 | Ch157 40M | 270 | 19 |
| 4 | Ch36 20M | 110 | 13 |
| 5 | Ch149 40M | 200 | 200 |
| 6 | Ch36 40M | 180 | 180 |
| 7 | Ch48 80M | 300 | 300 |

As shown in Table 7, the available channels are ranked as Ch44 40M, Ch157 40M, Ch165 20M and Ch36 20M in descending order of the total rate capacities, and the alternative channels are ranked as Ch48 40M, Ch149 40M, and Ch36 40M in descending order of the total rate capacities. The available channels are ranked as Ch165 20M, Ch157 40M, Ch36 20M, Ch44 40M in descending order of the remaining rate capacities. In FIG. 10, the services of the devices in the team 1 require a rate supported by a channel to be greater than or equal to 337 Mbps. The service of the devices in the team 2 requires a rate supported by a channel to be greater than or equal to 107 Mbps. The service of the devices in the team 3 requires a rate supported by a channel to be greater than or equal to 251 Mbps. The services of the devices in the team 4 require a rate supported by a channel to be greater than or equal to 97 Mbps. The rate that is supported by a channel and that is required by the service of the device in the team 3 is greater than a rate that is supported by a channel and that is required by the service of the device in the team 2. Therefore, the priorities of the channels are adjusted based on the total rate capacities of the channels and the remaining rate capacities of the channels. That is, "Ch44 40M, Ch157 40M, Ch165 20M, Ch36 20M, Ch149 40M, Ch36 40M, and Ch48 80M" is adjusted to "Ch44 40M, Ch165 20M, Ch157 40M, Ch36 20M, Ch149 40M, Ch36 40M, and Ch48 80M". That is, Ch44 40M is allocated to the team 1, Ch165 20M is allocated to the team 2, Ch157 40M is allocated to the team 3, and Ch36 20M is allocated to the team 4. The total rate capacity of Ch149 40M is greater than that of Ch36 40M, and therefore Ch149 40M can be used as an alternative channel of the team 1, and Ch36 40M can be used as an alternative channel of the team 2. Ch48 80M is used as a common alternative channel.

S705: If the preset condition is met, determine whether the first team is allocated the first channel for the first time.

S706: If the first team is allocated the first channel for the first time, allocate the first channel to the first team according to the priority ranking of the channels, and deduct rate capacity overheads of the service of the first team from the remaining rate capacity of the first channel.

It should be understood that, if the first team is allocated a channel for the first time, the primary device may allocate the first channel to the first team. Considering that the first channel may be further allocated to another team subsequently, or the first channel is released after the service of the first team is completed, the first channel may be reallocated to the another team. However, before the first channel is allocated to the another team, it needs to be determined whether the remaining rate capacity of the first channel meets a rate capacity requirement of the another team. Therefore, the primary device needs to maintain the remaining rate capacity of the first channel. That is, when the first channel is allocated to the first team, the primary device may update the remaining rate capacity of the first channel, that is, needs to deduct the rate capacity overheads of the service of the first team from the remaining rate capacity of the first team. It should be noted that, allocating the first channel to the first team may also be understood as: The primary device updates the priority of the first channel, that is, adjusts the priority of the first channel upward, for example, adjusts the priority of the first channel upward by one level.

S707: If it is not the first time to allocate the first team the first channel, determine whether an interference difference between the first channel and a current channel of the first team is greater than or equal to a preset threshold.

S708: If the interference difference between the first channel and the current channel of the first team is greater than or equal to the preset threshold, allocate the first channel to the first team, and deduct rate capacity overheads of the service of the first team from the remaining rate capacity of the first channel.

S709: If the interference difference between the first channel and the current channel of the first team is less than the preset threshold, do not change the current channel of the first team.

If it is not the first time to allocate the first team a channel, that is, the first team is currently allocated a channel, although the primary device finds a channel, for example, the first channel, with less interference than the current channel of the first team, considering that the interference difference between the first channel and the current channel of the first team is not large, even if the channel of the first team is changed from the current channel to the first channel, the service of the first team is not greatly affected. To prevent an unnecessary channel change, when the interference difference between the first channel and the current channel of the first team is less than the preset threshold, the current channel of the first team may not be changed. If the interference difference between the first channel and the current channel of the first team is greater than or equal to the preset threshold, the first channel may be allocated to the first team, and the rate capacity overheads of the service of the first team are deducted from the remaining rate capacity of the first channel. That is, the first team is arranged on a channel with less interference, to minimize interference between devices or between services. In a possible implementation, an interference difference between two channels may be a channel interference score difference between the two channels. It should be noted that allocating the first channel to the first team may be understood as: The primary device updates the priority of the first channel, that is, adjusts the priority of the first channel upward, for example, adjusts the priority of the first channel upward by one level. That the channel of the first team is not changed may also be understood as: The priority of the first channel remains unchanged.

The primary device may generate the second RRM information based on Table 6, to schedule a proper channel for each secondary device, so as to minimize interference between the teams and interference between services in each team. In an example, Table 8 shows the second RRM information. Table 8 is merely an example. It should be noted that the primary device may not need to notify each secondary device of the total rate capacity and the remaining rate capacity of each channel. That is, the second RRM information may not include the total rate capacity and the remaining rate capacity of each channel.

**Table 8**

| Team number | Channel and bandwidth | Identity of a device 1 | Identity of a device 2 | ... | Identity of a device N |
|---|---|---|---|---|---|
| 1 | Ch44 40M | Device 1 | Device 2 | / | Device 5 |
| 2 | Ch165 20M | Device 6 | Device 7 | / | / |
| 3 | Ch157 40M | Device 8 | Device 9 | / | / |
| 4 | Ch36 20M | Device 10 | Device 11 | / | Device 12 |
| 5 | Ch149 40M | Alternative channel of the team 1 | | | |
| 6 | Ch36 40M | Alternative channel of the team 2 | | | |
| 7 | Ch48 80M | Common alternative channel | | | |

S543a: The primary device broadcasts the second RRM information on the common channel, and correspondingly, each secondary device receives the second RRM information on the common channel.

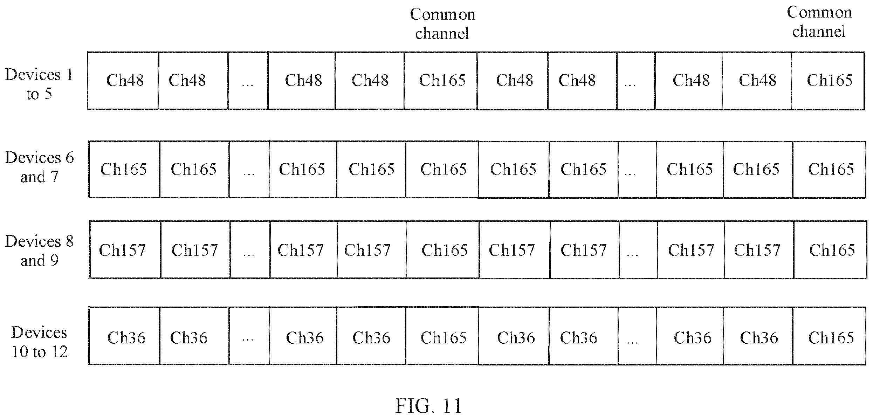

The second RRM information may be carried in a beacon frame, and the primary device broadcasts the beacon frame on the common channel. Each secondary device receives the beacon frame from the primary device, and may learn of a channel switching sequence. A possible structure of the beacon frame is described below, and is not described herein. It should be understood that, the example in FIG. 10 is still used, and a channel switching sequence of each device is shown in FIG. 11.

S541a to S543a mainly describe a procedure of the primary device on the common channel. The following describes a procedure of the secondary device on the common channel.

S541b: Each secondary device receives and saves the second RRM information from the primary device.

S542b: Each secondary device determines whether channel measurement is completed and whether an interference reporting timer expires.

S543b: Each secondary device determines that channel measurement is completed, and sends the channel interference information to the primary device when the interference reporting timer expires. If a secondary device does not complete channel measurement, or the interference reporting timer does not expire, the secondary device continues to determine whether channel measurement is completed and whether the interference reporting timer expires.

Because the procedures of the secondary devices are the same, for ease of description, the following uses the first secondary device as an example to describe the procedure of each secondary device on the common channel. It should be understood that the first secondary device may determine, on the common channel, whether channel measurement is completed, and if channel measurement is completed, may send a channel measurement result, namely, the channel interference information, to the primary device. To enable the primary device to determine an interference status of each channel of each secondary device in a same time period, the interference reporting timer may be uniformly set in this embodiment of this application. Each secondary device may report the generated channel interference information of each channel to the primary device when the interference reporting timer expires. For generation of the channel interference information, refer to related content in S541a. Details are not described herein again. The channel interference information may be carried in an action frame, and the first secondary device sends the action frame to the primary device, to notify the primary device of the channel interference information. A structure of the action frame is described below, and is not described herein.

S544b: Each secondary device determines, based on the second RRM information, whether a current channel needs to be changed.

The first secondary device is used as an example. The first secondary device may receive and save the second RRM information from the primary device before the interference reporting timer expires. In this way, the first secondary device may perform channel switching based on the second RRM information, to minimize interference between the first secondary device and another device. If the first secondary device needs to switch a channel, the first secondary device switches a service channel, and continues service transmission on a switched channel. If channel switching is not required, the first secondary device continues service transmission on the current service channel.

The foregoing embodiments mainly describe the procedures of the primary device and the secondary device on the common channel. The following describes procedures of the primary device and the secondary device on service channels. It should be understood that, the primary device and the secondary device are not distinguished on the service channel, that is, perspectives of the devices in S551 to S557 are equal.

S551: Each device continues service transmission on a current channel.

If each secondary device determines, based on the second RRM information, that a channel does not need to be changed, each secondary device switches to the current channel in a slot for channel switching, to continue service transmission.

S552: Each device determines whether a service is idle or a scanning periodicity expires.

S553: When a service is idle or a scanning periodicity expires, each device switches to a next channel, measures the next channel, and generates channel interference information of the channel.

The scanning periodicity is a channel measurement periodicity. If each device determines that a service is idle, each device may switch to the next channel, measure the next channel, and generate channel interference information based on a measurement result. Alternatively, if each device determines that the scanning periodicity expires, that is, current channel measurement is completed, the device may also switch to the next channel, measure the next channel, and generate channel interference information based on a measurement result. For example, each device may cyclically measure a predefined channel; or the primary device may notify each secondary device of a to-be-measured channel, which is more flexible; or a team owner in each team may additionally notify another device in the team of a to-be-measured channel, to avoid a case that the secondary device misses a to-be-measured channel because the secondary device does not receive a notification from the primary device. Each device obtains the channel interference information and may send the channel interference information to the primary device on the common channel. Certainly, if each device determines that the service is not idle, it indicates that the device is performing a service. In this case, to minimize a service delay, each device may continue service transmission. Certainly, if the scanning periodicity does not expire, and it is determined that measurement on the current channel is completed, a next channel may also be switched to for measurement. That is, in one scanning periodicity, one channel or a plurality of channels may be measured.

In this embodiment of this application, each device performs, on a service channel, channel measurement on each currently used channel or another alternative channel, and notifies the primary device of channel interference information obtained through measurement. The primary device may perform priority ranking on information based on the channel interference information reported by each channel, and a channel with less interference has a higher priority. The primary device may preferentially allocate a channel with less interference to each device based on the priority ranking of the channels. Compared with the first-type distributed system in which each link follows a channel of a GO or randomly selects a channel, in this embodiment of this application, it can be ensured that each link of each device works on a channel with less interference, to minimize interference between devices and between services. Compared with the second-type distributed system in which channel and slot allocation of each link is negotiated by devices at two ends of the link, this embodiment of this application can implement collaborative scheduling and anti-interference across an entire network, to improve an overall throughput of the network.

For example, in an office scenario, a plurality of devices in a near field collaborate with each other to perform a 2K 60 fps projection service. If the first-type distributed system in which a device follows a channel of a GO is still used, an interference duty cycle between channels is greater than or equal to 50%. However, according to the solution in this embodiment of this application, channels of all devices are managed in a centralized manner, to ensure that each device switches to a channel with less interference in real time. In this way, the interference duty cycle between channels is less than or equal to 10% to prevent frame freezing in the 2K 60 fps projection service. Alternatively, compared with the second-type distributed system in which channel and slot allocation of each link is negotiated by devices at two ends of the link, the solution in this embodiment of this application can still reduce an interference duty cycle between channels, avoid frame freezing of a service, and further increase a quantity of service links, that is, improve an overall throughput of a network, as shown in Table 9. Table 9 is an experimental comparison result of a quantity of links in the solution provided in this embodiment of this application and a quantity of links in the solution provided in the conventional technology.

**Table 9**

| | 5G 20M | 5G 40M | 5G 80M |
|---|---|---|---|
| Solution provided in this embodiment of this application | 1-channel projection | 3-channel projection | 6-channel proj ection |
| Solution provided in the conventional technology | Unable to implement projection | 1-channel projection | 3-channel projection |

In a possible scenario, in a process in which each device performs a service, frame freezing of the service may occur, or a service delay is long, or a channel is busy due to interference. In this case, to ensure normal service running, each device may switch to an alternative channel or another channel with less interference.

In some embodiments, if any device determines that a channel switching condition is met, for example, frame freezing of a service occurs, a service delay is long, or a channel is busy due to interference, the device may indicate another device in a team in which the device is located to switch to an alternative channel together.

S554: Each device determines whether the channel switching condition is met.

S555: If the first secondary device determines that the channel switching condition is met, the first secondary device sends a notification frame to another device in a team in which the first secondary device is located, where the notification frame indicates the another device to switch to an alternative channel.

Each device may send a notification frame to another device in the team, or may broadcast a notification frame in the team. This is not limited in this embodiment of this application. A possible structure and implementation of the notification frame are described below, and are not described herein.

S556: The another device switches a channel, and continues service transmission on the switched channel.

Because the second RRM information broadcast by the primary device indicates an alternative channel and indicates a priority of the alternative channel, after receiving the notification frame, another device may preferentially switch to a channel with a higher priority based on the alternative channel and the priority of the alternative channel that are indicated in the second RRM information.

In this embodiment of this application, when determining that the channel switching condition is met, any device indicates another device in the team to switch to a channel with less interference, to ensure normal running of a service.

S554 to S556 describe a process in which any device actively indicates another device in the team to switch a channel. In an alternative solution, the primary device forces each secondary device to switch a current channel. This can avoid a case that some secondary devices may switch to a channel of another team because the secondary devices do not obtain the second RRM information. For example, there is a first team and a second team, and a first secondary device in the first team does not receive a beacon frame that carries the second RRM information from the primary device. A second secondary device in the first team determines that the channel switching condition is met, and the second secondary device sends a notification frame to each secondary device in the first team. Because the first secondary device in the first team cannot obtain the second RRM information, the first secondary device may still use stored RRM information. In this case, the first team and the second team may switch to a same channel, causing mutual interference. However, the primary device may maintain the second RRM information. Therefore, the primary device forces each secondary device to switch a current channel, to avoid abnormal switching of different teams to a same channel, and reduce mutual interference between links. In addition, this can also avoid a case that a device cannot switch to a channel that is the same as that of another device in the team because the device does not receive a notification frame from the another device in the team. The primary device can force the device to switch to the same channel as another device in the team.

It should be understood that the primary device forces each secondary device to switch the current channel only when determining that the channel switching condition is met. For example, in a possible scenario, the primary device finds, by using connection information of the devices in the system, that the two teams switch to a same channel or there is a channel with less interference, and the primary device may send, to each device in one of the two teams, a notification frame used for channel switching. The notification frame may carry related information about a channel to which each device in the team needs to switch.

In another possible scenario, the primary device finds, by using connection information of the devices in the system, that different devices in a same team are not on a same channel. For example, a channel of the first team is the first channel, and the primary device finds that the first secondary device in the first team is on the first channel, and the second secondary device in the first team is not on the first channel. In this case, the primary device may send the notification frame used for channel switching to the second secondary device. The notification frame may carry related information of the first channel.

The following describes possible structures and specific implementations of various frames in this embodiment of this application, for example, a beacon frame used by the primary device to broadcast RRM information, a dynamic frame used by a secondary device to report channel interference information, that is, an action frame, and a notification frame used for channel switching, which may also be referred to as a channel switching frame. The channel switching frame may also be an action frame.

The action frame used by a secondary device to report channel interference information and the action frame used for channel switching may be customized frames. To reuse the action frame, the action frame may include a field that carries a type of the action frame, to distinguish a function of the action frame.

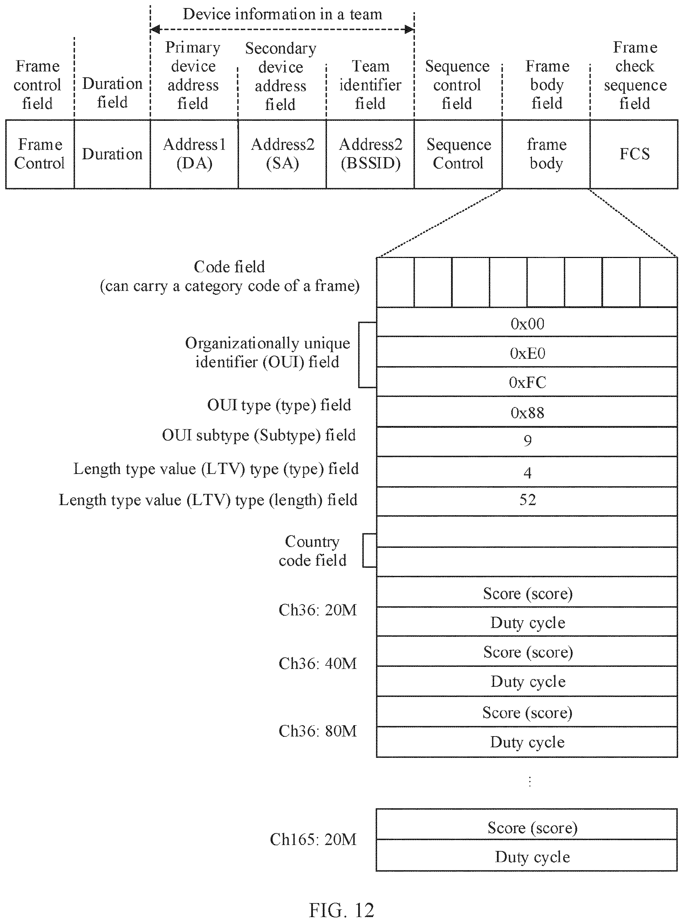

In an example, FIG. 12 is a schematic diagram of a structure of an action frame used by a secondary device to report channel interference information. For a format of the action frame, refer to Vendor Specific IE, and the action frame carries RRM information and a private IE in the action frame. For example, the action frame may include a plurality of fields, for example, a frame control (Frame Control) field, a duration (Duration) field, and fields that carry information about a team and devices in a team, for example, include a primary device address field (address1 field), a secondary device address field (address2 field), a team identifier (BSSID) field, a sequence control (sequence control) field, a frame body (frame body) field, and a frame check sequence (frame check sequence, FCS) field. It should be noted that FIG. 12 is merely an example. A PNF may include more or fewer fields, and each field may occupy one or more bits. This is not limited in this embodiment of this application. The frame control field may occupy a plurality of bits, and carry information such as a protocol version and a frame subtype. The duration field may occupy a plurality of bits, and carry channel occupancy time. The BSSID field may occupy a plurality of bits, and carry information about a team in which a secondary device is located. The sequence control field may occupy a plurality of bits, and carry a sequence number of a sent packet. The frame body field may occupy a plurality of bits, and carry channel interference information of the secondary device.

The frame body field may include a plurality of fields, for example, a code field, an organizationally unique identifier (organizationally unique identifier, OUI) field, an OUI subtype (Subtype) field, an action type (action type) field, a length type value (length type value, TLV) type field, a channel country code field, and a channel interference information field. The code field may be filled based on a category code (category code) of the action frame, for example, may be determined as 127 according to the 802.11 protocol, that is, indicates a vendor-specific action. The OUI field may be predefined. For example, the OUI field may carry "0x00-E0-FC", to indicate that the action frame is a private frame. The OUI type field identifies an OUI type, for example, a private frame related to the action frame provided in this embodiment of this application. The OUI subtype field identifies an action frame type. For example, the action frame type may be "0x88". The TLV type field may be "4". The channel country code field identifies a country code of each channel. The channel interference information field carries channel interference information of each channel, for example, a channel interference score and an interference duty cycle. As shown in FIG. 12, the information interference information field may carry channel interference scores and interference duty cycles of Ch36 20M, Ch36 40M, Ch36 80M, and Ch165 20M. It should be noted that, for a definition of a field other than the channel interference information field that may be included in the action frame, refer to a definition in the 802.11 standard. Details are not described herein.

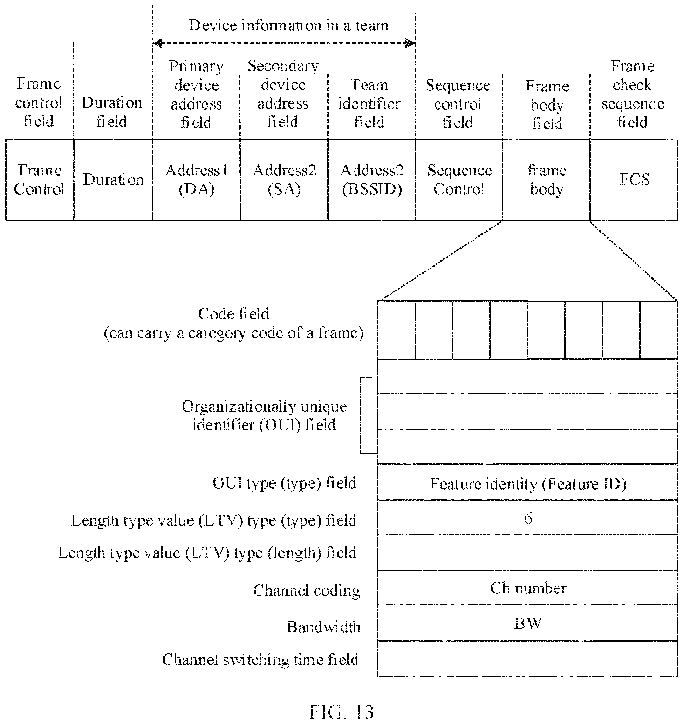

FIG. 13 is a schematic diagram of a structure of an action frame used for channel switching. A format of the action frame is similar to that in FIG. 12. For details, refer to related content in FIG. 12. A difference from FIG. 12 lies in that, compared with the action frame used by a secondary device to report channel interference information, a frame body field of the action frame used for channel switching may include fewer fields, for example, include a code field, an OUI field, an OUI type field (for example, carrying a feature (Feature) ID), a TLV type field, and a TLV length field, and fields that carry information about a to-be-switched channel, for example, a Ch number field that carries a channel number, a BW field that carries a channel bandwidth, and a change CH time field that carries channel switching time.

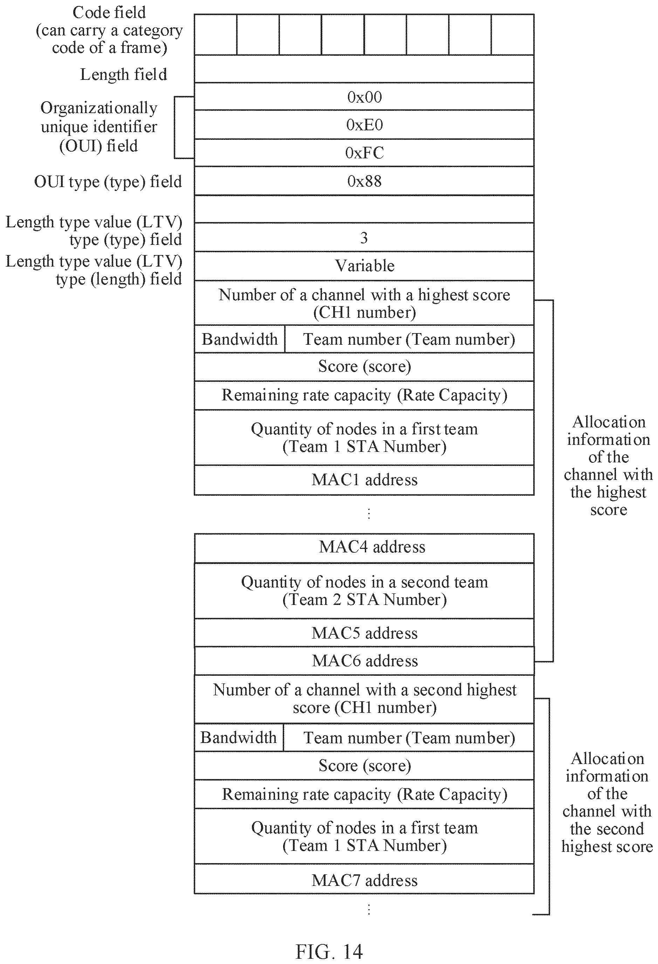

FIG. 14 is a schematic diagram of a structure of a beacon frame. The beacon frame may carry RRM information to be sent by the primary device, for example, a score of each channel, a bandwidth of each channel, a quantity of devices in each team, a quantity of teams to which each channel is allocated, and a MAC address of a device included in each team. As shown in FIG. 14, CH1 Number represents a number of a channel with a highest score; BW occupies two bits and represents a bandwidth corresponding to the score; Team Number occupies six bits and represents a quantity of teams allocated to a channel and a bandwidth of a team; Score represents a score of the channel; Rate Capacity represents a remaining rate capacity; Team 1 STA Number represents a quantity of allocated nodes in a first team; MAC xx represents a MAC address of a node in Team 1, and xx is a sequence number of nodes in the team; CH2 Number represents a number of a channel with a second highest score; BW represents a bandwidth corresponding to the score; and so on. If a device has not established a link or a device has not received link establishment information, a value of Team Number is 0. In this case, a quantity of teams allocated to a channel and a bandwidth of a team is not carried, and only channel score ranking information is carried.

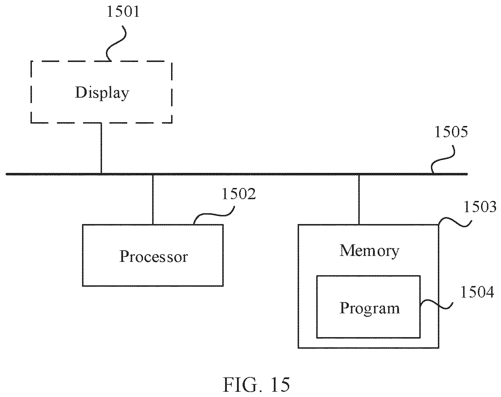

Based on the foregoing embodiment, an embodiment of this application further provides an electronic device. The electronic device is, for example, a mobile phone, a PAD, a portable computer, or a smart speaker. As shown in FIG. 15, the electronic device may include a display 1501, one or more processors 1502, and one or more memories 1503, configured to store one or more programs 1504. The foregoing components may be connected through one or more communication buses 1505. The display 1501 may be configured to display content of a file in the electronic device; the display 1501 may be configured to display a desktop of the electronic device; the display 1501 may be configured to display an image; or the like.

When the one or more programs 1504 stored in the memory 1503 are executed by the one or more processors 1502, the electronic device may be configured steps in the embodiments, for example, perform steps in the embodiment shown in FIG. 5A to FIG. 5C or FIG. 7 or other corresponding embodiments. Certainly, in some embodiments, the electronic device may further include a transceiver, configured to communicate with another device. It should be noted that the processor 1502 may be a processing module/processing unit, and the transceiver may be a transceiver module/communication interface or the like.

In some embodiments, the electronic device is configured to implement a behavior function of the primary device in the foregoing embodiments. The transceiver may be configured to receive channel score information from each secondary device, where each piece of channel score information indicates a degree of interference to each channel measured by a corresponding device. The processor may be configured to generate first RRM information based on the received channel score information and channel score information of the primary device, where the first RRM information indicates a priority ranking of the channels, and a higher priority of a channel indicates a lower degree of interference to the channel. The transceiver is further configured to send the first RRM information to each secondary device.

In an optional implementation, the processor is further configured to: before generating the first RRM information based on the received channel score information and the channel score information of the primary device, measure each channel, to obtain the channel score information of the primary device.

In an optional implementation, the processor is specifically configured to:
combine channel interference information from the plurality of secondary devices, to obtain target channel interference information, where the target interference information includes a channel interference score and/or an interference duty cycle of each channel; and
generate the first RRM information based on the target channel interference information.

In an optional implementation, the processor is specifically configured to update the first RRM information based on one or more of the following factors: the channel interference score of each channel, the interference duty cycle of each channel, a service priority of a team corresponding to each channel, a remaining rate capacity of each channel, a total rate capacity of each channel, and a quantity of devices included in each team.

In an optional implementation, the processor is further configured to: determine, based on a service priority of a first team, that a remaining rate capacity of a first channel to be allocated to the first team does not meet a service requirement of the first team, lower a priority of the first channel by one level, and update the first RRM information to second RRM information.

In an optional implementation, the processor is further configured to determine that the primary device meets a channel switching condition. The transceiver is further configured to send a first notification frame to another device in a team in which the primary device is located. The first notification frame indicates the another device to switch to an alternative channel. The channel switching condition includes one or more of the following: frame freezing of a service occurs, a service delay exceeds a second preset threshold, and a second channel on which the primary device currently works is busy.

In an optional implementation, the processor is further configured to determine that a second secondary device and a third secondary device included in a second team work on a plurality of channels. The transceiver is further configured to send the first notification frame to the third secondary device. The first notification frame indicates the third secondary device to switch to a channel on which the second secondary device works.

In an optional implementation, the processor is further configured to determine that a third team and a fourth team work on a third channel. The transceiver is further configured to send a second notification frame to the fourth team. The second notification frame indicates the fourth team to switch from the third channel to a fourth channel.

In some other embodiments, the electronic device is configured to implement a behavior function of the first secondary device in the foregoing embodiments. In this case, the transceiver is configured to send channel score information to the primary device, and receive first RRM information from the primary device. The processor is configured to: when determining that a degree of interference to a first channel on which the first secondary device currently works is greater than a first preset threshold, switch from the first channel to a second channel based on the first RRM information. The channel score information indicates a degree of interference to each channel measured by the first secondary device. A higher priority of a channel indicates a lower degree of interference to the channel. The degree of interference to the first channel is greater than a degree of interference to the second channel.

In an optional implementation, the transceiver is specifically configured to:
send the channel score information to the primary device when a first duration of an interference reporting timer expires. The interference reporting timer includes a plurality of durations, and each duration is used by a part of the secondary devices to report respective channel interference information.

In an optional implementation, a difference between the degree of interference to the first channel and the degree of interference to the second channel is greater than or equal to a second preset threshold.

In an optional implementation, the processor is further configured to determine that the first secondary device meets a channel switching condition. The transceiver is further configured to send a first notification frame to another device in a team in which the first secondary device is located. The first notification frame indicates the another device to switch to an alternative channel. The channel switching condition includes one or more of the following: frame freezing of a service occurs, a service delay exceeds the second preset threshold, and the second channel is busy.

In an optional implementation, the transceiver is further configured to:
receive a second notification frame from the primary device. The second notification frame indicates the first secondary device to switch to a channel on which a second secondary device works. The first secondary device and the second secondary device belong to a same team, and the first secondary device and the second secondary device work on different channels.

In an optional implementation, the transceiver is further configured to:
receive a third notification frame from the primary device. The third notification frame indicates the first secondary device to switch from a fourth channel to a fifth channel. The fourth channel is a channel on which a plurality of teams work, and the first secondary device belongs to one of the plurality of teams.

It should be noted that, in this embodiment of this application, division into the units is an example, and is merely a logical function division. During actual implementation, another division manner may be used. Function units in embodiments of the present invention may be integrated into one processing unit, each unit may exist alone physically, or two or more units may be integrated into one unit. For example, in the foregoing embodiments, a first obtaining unit and a second obtaining unit may be a same unit or different units. The integrated unit may be implemented in a form of hardware, or may be implemented in a form of a software function unit, or may be implemented in a form of a combination of hardware and a software function unit.

According to the context, the term "when" used in the foregoing embodiments may be interpreted as "if", "after", "in response to determining", or "in response to detecting". Similarly, according to the context, the phrase "when it is determined that" or "if (a stated condition or event) is detected" may be interpreted as a meaning of "if it is determined that", "in response to determining", "when (a stated condition or event) is detected", or "in response to detecting (a stated condition or event)".

All or a part of the foregoing embodiments may be implemented by software, hardware, firmware, or any combination thereof. When software is used to implement the foregoing embodiments, all or a part of the foregoing embodiments may be implemented in a form of a program product. The program product includes one or more computer instructions. When the program instructions are loaded and executed on a computer, the procedures or functions according to embodiments of this application are all or partially generated. The computer may be a general-purpose computer, a dedicated computer, a computer network, or other programmable devices. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A resource management method, applied to a domain comprising a primary device and a plurality of secondary devices, wherein a plurality of interconnected devices in the domain form a team, and the method comprises:
receiving, by the primary device, channel score information from each secondary device, wherein each piece of channel score information indicates a degree of interference to each channel measured by a corresponding secondary device;
generating, by the primary device, first radio resource management RRM information based on the received channel score information and channel score information of the primary device, wherein the first RRM information indicates a priority ranking of the channels, and a higher priority of a channel indicates a lower degree of interference to the channel; and
sending, by the primary device, the first RRM information to each secondary device.

2. The method according to claim 1, wherein the generating, by the primary device, first RRM information based on the received channel score information and channel score information of the primary device comprises:
combining, by the primary device, channel interference information from the plurality of secondary devices, to obtain target channel interference information, wherein the target interference information comprises a channel interference score and/or an interference duty cycle of each channel; and
generating the first RRM information based on the target channel interference information.

3. The method according to claim 2, wherein the method further comprises:
updating, by the primary device, the first RRM information based on one or more of the following factors:
the channel interference score of each channel, the interference duty cycle of each channel, a service priority of a team corresponding to each channel, a remaining rate capacity of each channel, a total rate capacity of each channel, and a quantity of devices comprised in each team.

4. The method according to claim 2 or 3, wherein the method further comprises:
determining, by the primary device based on a service priority of a first team, that a remaining rate capacity of a first channel to be allocated to the first team does not meet a service requirement of the first team, lowering a priority of the first channel by one level, and updating the first RRM information to second RRM information.

5. The method according to claim 3, wherein the method further comprises:
before the generating, by the primary device, first RRM information based on the received channel score information and channel score information of the primary device, measuring, by the primary device, each channel, to obtain the channel score information of the primary device.

6. The method according to any one of claims 1 to 5, wherein the method further comprises:
if the primary device determines that the primary device meets a channel switching condition, wherein the channel switching condition comprises one or more of the following: frame freezing of a service occurs, a service delay exceeds a second preset threshold, and a second channel on which the primary device currently works is busy, sending, by the primary device, a first notification frame to another device in a team in which the primary device is located, wherein the first notification frame indicates the another device to switch to an alternative channel.

7. The method according to any one of claims 1 to 6, wherein the method further comprises:
if the primary device determines that a second secondary device and a third secondary device comprised in a second team work on a plurality of channels, sending, by the primary device, the first notification frame to the third secondary device, wherein the first notification frame indicates the third secondary device to switch to a channel on which the second secondary device works.

8. The method according to any one of claims 1 to 7, wherein the method further comprises:
if the primary device determines that a third team and a fourth team work on a third channel, sending, by the primary device, a second notification frame to the fourth team, wherein the second notification frame indicates the fourth team to switch from the third channel to a fourth channel.

9. A resource management method, applied to a domain comprising a primary device and a plurality of secondary devices, wherein a plurality of interconnected devices in the domain form a team, the plurality of secondary devices comprise a first secondary device, and the method comprises:
sending, by the first secondary device, channel score information to the primary device, wherein the channel score information indicates a degree of interference to each channel measured by the first secondary device;
receiving, by the first secondary device, first radio resource management RRM information from the primary device, wherein the first RRM information indicates a priority ranking of the channels, and a higher priority of a channel indicates a lower degree of interference to the channel; and
when determining that a degree of interference to a first channel on which the first secondary device currently works is greater than a first preset threshold, switching, by the first secondary device, from the first channel to a second channel based on the first RRM information, wherein the degree of interference to the first channel is greater than a degree of interference to the second channel.

10. The method according to claim 9, wherein the sending, by the first secondary device, channel score information to the primary device comprises:
sending, by the first secondary device, the channel score information to the primary device when a first duration of an interference reporting timer expires, wherein the interference reporting timer comprises a plurality of durations, and each duration is used by a part of the secondary devices to report respective channel interference information.

11. The method according to claim 9 or 10, wherein a difference between the degree of interference to the first channel and the degree of interference to the second channel is greater than or equal to a second preset threshold.

12. The method according to any one of claims 9 to 11, wherein the method further comprises:
determining, by the first secondary device, that the first secondary device meets a channel switching condition, wherein the channel switching condition comprises one or more of the following: frame freezing of a service occurs, a service delay exceeds the second preset threshold, and the second channel is busy; and
sending, by the first secondary device, a first notification frame to another device in a team in which the first secondary device is located, wherein the first notification frame indicates the another device to switch to an alternative channel.

13. The method according to any one of claims 9 to 12, wherein the method further comprises:
receiving, by the first secondary device, a second notification frame from the primary device, wherein the second notification frame indicates the first secondary device to switch to a channel on which a second secondary device works, the first secondary device and the second secondary device belong to a same team, and the first secondary device and the second secondary device work on different channels.

14. The method according to any one of claims 9 to 13, wherein the method further comprises:
receiving, by the first secondary device, a third notification frame from the primary device, wherein the third notification frame indicates the first secondary device to switch from a fourth channel to a fifth channel, the fourth channel is a channel on which a plurality of teams work, and the first secondary device belongs to one of the plurality of teams.

15. An electronic device, wherein the electronic device is any one of a plurality of electronic devices in a distributed system, the distributed system further comprises a second electronic device and a third electronic device, the electronic device comprises a memory and at least one processing module coupled to the memory, the memory is configured to store instructions, the at least one processing module is configured to execute the instructions, and when the at least one processing module executes the instructions, the electronic device is enabled to perform the method according to any one of claims 1 to 8.

16. An electronic device, wherein the electronic device is any one of a plurality of electronic devices in a distributed system, the distributed system further comprises a second electronic device and a third electronic device, the electronic device comprises a memory and at least one processing module coupled to the memory, the memory is configured to store instructions, the at least one processing module is configured to execute the instructions, and when the at least one processing module executes the instructions, the electronic device is enabled to perform the method according to any one of claims 9 to 14.

17. A distributed system, comprising the electronic device according to claim 15 and a plurality of electronic devices according to claim 16.

18. A chip, wherein the chip comprises a processing module and an interface, the interface is configured to communicate with the processing module and receive information from another device, and the processing module is configured to perform the method according to any one of claims 1 to 14.

19. A computer-readable storage medium, wherein the computer-readable storage medium stores computer-executable instructions, and when the computer-executable instructions are invoked by an electronic device, the electronic device is enabled to perform the method according to any one of claims 1 to 14.
